# EUROPEAN PATENT APPLICATION

(11) **EP 3 741 765 A1**
(43) Date of publication of application: **25.11.2020**
(21) Application number: 19741803.1
(22) Date of filing: 18.01.2019
(51) Int. Cl.: C07F 7/18, C08K 3/36, C08K 5/548, C08L 21/00

(54) **ORGANOSILICON COMPOUND AND RUBBER COMPOSITION INCLUDING SAME**

(30) Priority: 19.01.2018 JP 2018007561
(71) Applicant: Osaka Soda Co., Ltd., Osaka-shi, Osaka 550-0011 (JP)
(72) Inventor: TACHI, Yukihiro, Osaka-shi, Osaka 550-0011 (JP); FUKITANI, Ryota, Osaka-shi, Osaka 550-0011 (JP); INOUE, Satoshi, Osaka-shi, Osaka 550-0011 (JP)
(74) Representative: Müller-Boré & Partner Patentanwälte PartG mbB
(86) International application number: PCT/JP2019/001400
(87) International publication number: WO 2019/142890

(57) **Abstract**

The present invention provides an organosilicon compound that has a novel structure, that makes it possible to obtain a rubber material excellent in mechanical properties, fuel economy, and grip performance, and that is preferably obtained from a naturally occurring material; and a rubber composition comprising the organosilicon compound.

## Description

### TECHNICAL FIELD

The present invention relates to an organosilicon compound having a specific structure and a rubber composition comprising the same. The present invention is suitably used for applications such as a tire, a belt, and an anti-vibration rubber, and particularly suitably used for a tire.

### BACKGROUND ART

In recent years, various silica-compounded rubber products including a silica-compounded tire which is excellent in fuel economy and braking performance, anti-vibration rubber, and various rubber rolls are becoming widespread. However, the addition of silica considerably increases the compound viscosity of a rubber composition, and therefore a method of compounding a silane coupling agent to reduce the increase in viscosity has been commonly adopted. It is also known that a silane coupling agent reacts with silanol groups on the surface of silica to reduce the interaction between silica particles and to lower the loss tangent and dynamic elastic modulus of rubber.

Currently, among silane coupling agents, a polysulfide silane coupling agent is widely used for a low-fuel-consumption tire (see Patent Document 1).

### PRIOR ART DOCUMENT

### PATENT DOCUMENT

Patent Document 1: JP 2000-103794 (A)

### SUMMARY OF THE INVENTION

### PROBLEMS TO BE SOLVED BY THE INVENTION

The present invention aims at providing a silane coupling agent with further improved performances and, in particular, preferably providing a silane coupling agent using a sustainable material (naturally occurring material) in light of depletion of fossil fuels and utilization of natural resources.

In view of the above-mentioned circumstances, an object of the present invention is to provide an organosilicon compound that has a novel structure, that makes it possible to obtain a rubber material excellent in mechanical properties, fuel economy, and grip performance by the use of the organosilicon compound in a rubber composition and a rubber material, and that is preferably obtained from a naturally occurring material; and a rubber composition comprising the organosilicon compound.

### SOLUTIONS TO THE PROBLEMS

The inventors made intensive studies in order to solve the above-mentioned problems, and found that an organosilicon compound having a specific structure, preferably an organosilicon compound having a skeleton of an amino acid or its derivative, and a rubber composition using the same can solve the above-mentioned problems.

The present invention can be described as follows.
[Item 1] An organosilicon compound represented by the following general formula [A], [B], [1], or [2], or a condensate comprising at least one organosilicon compound selected from organosilicon compounds represented by the following general formulas [A], [B], [1], and [2] as a condensation component: 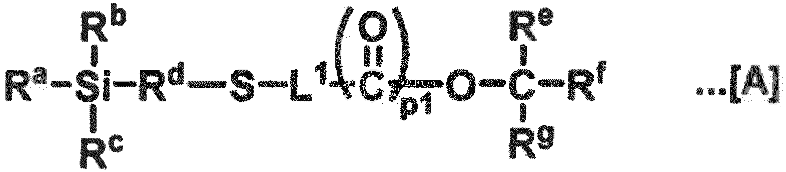
   wherein R^{a}. R^{b}, and R^{c} are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R^{a}, R^{b}, and R^{c} is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
   R^{d} is a substituted or unsubstituted divalent hydrocarbon group having 1 to 18 carbon atoms and optionally having an aromatic ring;
   L¹ is a single bond or a divalent organic group;
   R^{e}, R^{f} and R^{g} are each independently a monovalent hydrocarbon group having 1 to 10 carbon atoms; and
   p1 is 0 or 1; 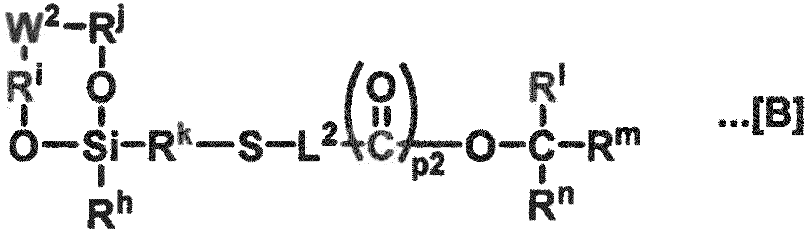
   wherein R^{h} is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
   Rⁱ and R^{j} are each independently a substituted or unsubstituted alkylene group having 1 to 8 carbon atoms;
   W² is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
   R^{k} is a substituted or unsubstituted divalent hydrocarbon group having 1 to 18 carbon atoms and optionally having an aromatic ring;
   L² is a single bond or a divalent organic group;
   R¹, R^{m} and Rⁿ are each independently a monovalent hydrocarbon group having 1 to 10 carbon atoms; and
   p2 is 0 or 1; 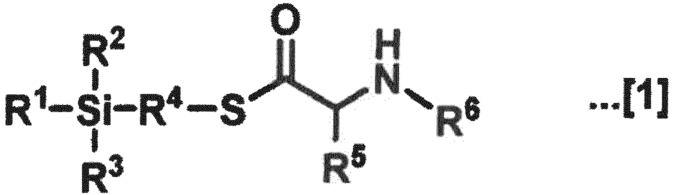
   wherein R¹, R², and R³ are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R¹, R², and R³ is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
   R⁴ is a substituted or unsubstituted divalent hydrocarbon group having 1 to 18 carbon atoms and optionally having an aromatic ring;
   R⁵ is hydrogen or an organic group; and
   R⁶ is hydrogen or an amino-protecting group; and 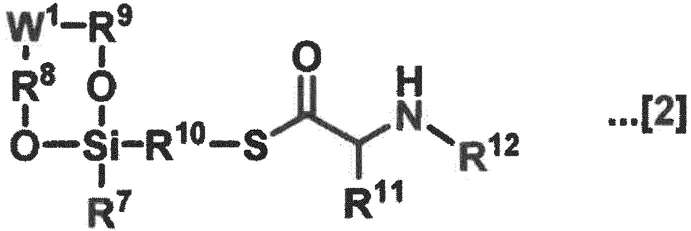
   wherein R⁷ is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
   R⁸ and R⁹ are each independently a substituted or unsubstituted alkylene group having 1 to 8 carbon atoms;
   W¹ is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
   R¹⁰ is a substituted or unsubstituted divalent hydrocarbon group having 1 to 18 carbon atoms and optionally having an aromatic ring;
   R¹¹ is hydrogen or an organic group; and
   R¹² is hydrogen or an amino-protecting group.
[Item 2] The organosilicon compound according to item 1, wherein the divalent organic group is a linear linking group having bonds at both ends and optionally having a side chain, and when a distance between the two bonds is counted with the number of atoms, the distance is 10 or less.
[Item 3] The organosilicon compound according to item 2, wherein the linear linking group is one or a combination of two or more selected from a linear alkylene group, -NH-, and -C(=O)-.
[Item 4] The organosilicon compound according to item 2 or 3, wherein the side chain is a substituent or a hydrocarbon group optionally having a substituent.
[Item 5] The organosilicon compound according to any of items 2 to 4, wherein the side chain is a natural α-amino acid side-chain group or a group derived from a natural α-amino acid side-chain group.
[Item 6] The organosilicon compound according to any of items 1 to 5, wherein the monovalent hydrocarbon group having 1 to 10 carbon atoms represents an alkyl group having 1 to 4 carbon atoms or a phenyl group.
[Item 7] The organosilicon compound according to item 1, wherein in the formula [1], R¹, R², and R³ are each independently a substituted or unsubstituted alkoxy group having 1 to 18 carbon atoms, and R⁴ is a substituted or unsubstituted divalent hydrocarbon group having 1 to 18 carbon atoms.
[Item 8] A rubber composition comprising a rubber; a silica filler; and an organosilicon compound represented by the following general formula [A], [B], [1], or [2], or a condensate comprising at least one organosilicon compound selected from organosilicon compounds represented by the following general formulas [A], [B], [1], and [2] as a condensation component; 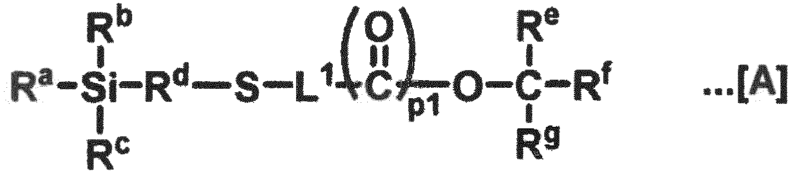
   wherein R^{a}, R^{b}, and R^{c} are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R^{a}, R^{b}, and R^{c} is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
   R^{d} is a substituted or unsubstituted divalent hydrocarbon group having 1 to 18 carbon atoms and optionally having an aromatic ring;
   L¹ is a single bond or a divalent organic group;
   R^{e}, R^{f} and R^{g} are each independently a monovalent hydrocarbon group having 1 to 10 carbon atoms; and
   p1 is 0 or 1; 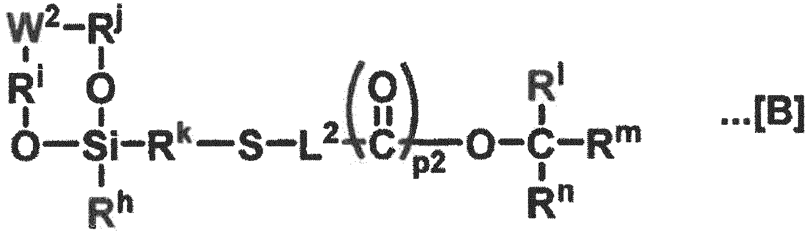
   wherein R^{h} is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
   Rⁱ and R^{j} are each independently a substituted or unsubstituted alkylene group having 1 to 8 carbon atoms;
   W² is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
   R^{k} is a substituted or unsubstituted divalent hydrocarbon group having 1 to 18 carbon atoms and optionally having an aromatic ring;
   L² is a single bond or a divalent organic group;
   R¹, R^{m} and Rⁿ are each independently a monovalent hydrocarbon group having 1 to 10 carbon atoms; and
   p2 is 0 or 1; 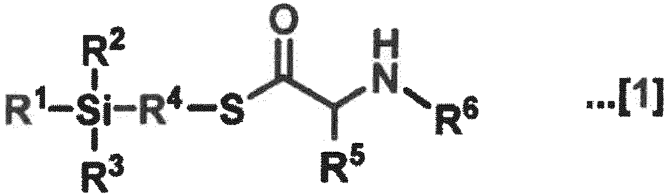
   wherein R¹, R², and R³ are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R¹, R², and R³ is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
   R⁴ is a substituted or unsubstituted divalent hydrocarbon group having 1 to 18 carbon atoms and optionally having an aromatic ring;
   R⁵ is hydrogen or an organic group; and
   R⁶ is hydrogen or an amino-protecting group; and 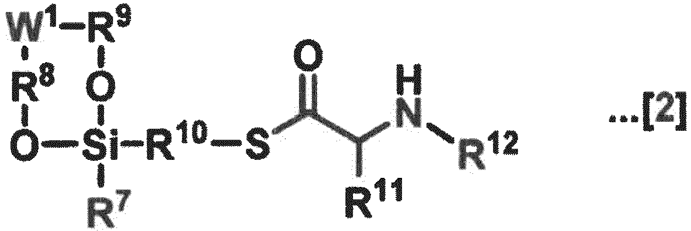
   wherein R⁷ is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
   R⁸ and R⁹ are each independently a substituted or unsubstituted alkylene group having 1 to 8 carbon atoms;
   W¹ is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
   R¹⁰ is a substituted or unsubstituted divalent hydrocarbon group having 1 to 18 carbon atoms and optionally having an aromatic ring;
   R¹¹ is hydrogen or an organic group; and
   R¹² is hydrogen or an amino-protecting group.
[Item 9] The rubber composition according to item 8, wherein the divalent organic group is a linear linking group having bonds at both ends and optionally having a side chain, and when a distance between the two bonds is counted with the number of atoms, the distance is 10 or less.
[Item 10] The rubber composition according to item 9, wherein the linear linking group is one or a combination of two or more selected from a linear alkylene group, -NH-, and -C(=O)-.
[Item 11] The rubber composition according to item 9 or 10, wherein the side chain is a substituent or a hydrocarbon group optionally having a substituent.
[Item 12] The rubber composition according to any of items 9 to 11, wherein the side chain is a natural α-amino acid side-chain group or a group derived from a natural α-amino acid side-chain group.
[Item 13] The rubber composition according to any of items 8 to 12, wherein the monovalent hydrocarbon group having 1 to 10 carbon atoms represents an alkyl group having 1 to 4 carbon atoms or a phenyl group.
[Item 14] The rubber composition according to item 8, wherein in the formula [1], R¹, R², and R³ are each independently a substituted or unsubstituted alkoxy group having 1 to 18 carbon atoms, and R⁴ is a substituted or unsubstituted divalent hydrocarbon group having 1 to 18 carbon atoms.
[Item 15] The rubber composition according to any of items 8 to 14, further comprising at least one selected from a vinyl organosilicon compound, an amino organosilicon compound, an alkyl organosilicon compound, an epoxy organosilicon compound, a methacrylic organosilicon compound, a (protected) mercapto organosilicon compound, a (poly)sulfide organosilicon compound, and condensates thereof.
[Item 16] The rubber composition according to any of items 8 to 15, wherein the rubber is one or two or more selected from natural rubber (NR), polyisoprene rubber (IR), styrene-butadiene copolymer rubber (SBR), polybutadiene rubber (BR), acrylonitrile-butadiene copolymer rubber (NBR), chloroprene rubber (CR), ethylene-propylene copolymer rubber (EPDM), and butyl rubber (IIR).
[Item 17] The rubber composition according to any of items 8 to 16, wherein the silica filler is a wet silica having a BET specific surface area of 20 to 300 m²/g.
[Item 18] A rubber material using the rubber composition according to any of items 8 to 17.
[Item 19] A tire, a belt, or an anti-vibration rubber using the rubber material according to item 18.

### EFFECT OF THE INVENTION

The inventors found that by using the organosilicon compound, preferably the organosilicon compound having a structure derived from a naturally occurring material, of the present invention in a rubber composition, it is possible to obtain a rubber material excellent in mechanical properties, fuel economy, and grip performance.

### MODE FOR CARRYING OUT THE INVENTION

Hereinafter, the present invention will be described in detail.

The present invention relates to an organosilicon compound represented by the general formula [A], [B], [1], or [2], or a condensate comprising at least one organosilicon compound selected from organosilicon compounds represented by the general formulas [A], [B], [1], and [2] as a condensation component. An organosilicon compound included in both organosilicon compounds represented by the general formula [A] and organosilicon compounds represented by the general formula [1] may be present, and an organosilicon compound included in both organosilicon compounds represented by the general formula [B] and organosilicon compounds represented by the general formula [2] may be present.

First, the organosilicon compound represented by the general formula [A] will be described in detail. 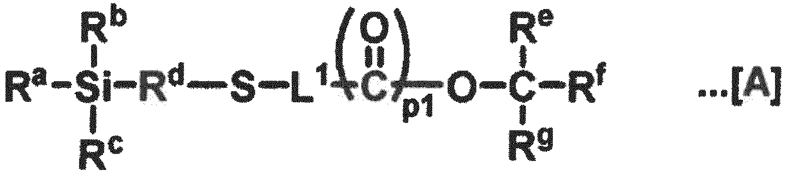
In the formula [A], R^{a}, R^{b}, and R^{c} are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R^{a}, R^{b}, and R^{c} is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
R^{d} is a substituted or unsubstituted divalent hydrocarbon group having 1 to 18 carbon atoms and optionally having an aromatic ring;
L¹ is a single bond or a divalent organic group;
R^{e}, R^{f} and R^{g} are each independently a monovalent hydrocarbon group having 1 to 10 carbon atoms; and
p1 is 0 or 1.

In the general formula [A], R^{a}, R^{b}, and R^{c} are, each independently, preferably any of a substituted or unsubstituted alkyl group having 1 to 8 carbon atoms, a substituted or unsubstituted alkoxy group having 1 to 12 carbon atoms, a siloxy group having a substituted or unsubstituted alkyl group having 1 to 8 carbon atoms, a siloxy group having a substituted or unsubstituted alkoxy group having 1 to 4 carbon atoms, an aminoalkoxy group having 1 to 12 carbon atoms, an alkylaminoalkoxy group having 2 to 12 carbon atoms, a dialkylaminoalkoxy group having 3 to 12 carbon atoms, and a polyalkylene glycol monoalkyl ether group represented by CₐH₂ₐ₊₁O-((CH₂)_{b}O)_{c} wherein a is 4 to 18, b is 2 to 4, and c is 1 to 12; particularly preferably any of a substituted or unsubstituted alkyl group having 1 to 4 carbon atoms, a substituted or unsubstituted alkoxy group having 1 to 8 carbon atoms, a siloxy group having a substituted or unsubstituted alkyl group having 1 to 4 carbon atoms, a siloxy group having a substituted or unsubstituted alkoxy group having 1 to 2 carbon atoms, an aminoalkoxy group having 1 to 12 carbon atoms, an alkylaminoalkoxy group having 2 to 12 carbon atoms, a dialkylaminoalkoxy group having 3 to 12 carbon atoms, and a polyalkylene glycol monoalkyl ether group represented by CₐH₂ₐ₊₁O-((CH₂)_{b}O)_{c} wherein a is 4 to 18, b is 2 to 4, and c is 1 to 8; and most preferably an unsubstituted alkoxy group having 1 to 3 carbon atoms.

At least one of R^{a}, R^{b}, and R^{c} is preferably any of a substituted or unsubstituted alkoxy group having 1 to 12 carbon atoms, a hydroxy group, a polyalkylene glycol monoalkyl ether group represented by CₐH₂ₐ₊₁O-((CH₂)_{b}O)_{c} wherein a is 2 to 18, b is 2 to 6, and c is 2 to 18, an aminoalkoxy group having 2 to 12 carbon atoms, an alkylaminoalkoxy group having 2 to 12 carbon atoms, and a dialkylaminoalkoxy group having 3 to 12 carbon atoms; particularly preferably any of a substituted or unsubstituted alkoxy group having 1 to 8 carbon atoms, a polyalkylene glycol monoalkyl ether group represented by CₐH₂ₐ₊₁O-((CH₂)_{b}O)_{c} wherein a is 4 to 18, b is 2 to 6, and c is 2 to 18, an aminoalkoxy group having 2 to 12 carbon atoms, an alkylaminoalkoxy group having 3 to 12 carbon atoms, and a dialkylaminoalkoxy group having 4 to 12 carbon atoms; and most preferably an unsubstituted alkoxy group having 1 to 3 carbon atoms.

In the general formula [A], R^{d} is preferably a substituted or unsubstituted divalent hydrocarbon group having 1 to 12 carbon atoms and optionally having an aromatic ring, and particularly preferably a substituted or unsubstituted alkylene group having 1 to 8 carbon atoms.

In the general formula [A], examples of the substituent that can substitute include an alkyl group such as methyl, ethyl, and isopropyl, an aryl group such as phenyl, an aralkyl group such as benzyl, an unsaturated hydrocarbon group such as a vinyl group, a halogeno group such as a fluoro group, a chloro group, a bromo group, and an iodine group, an amino group, and a nitro group.

In the general formula [A], L¹ is a single bond or a divalent organic group. The divalent organic group is a linear linking group having bonds at both ends and optionally having a side chain, and when a distance between the two bonds is counted with the number of atoms, the distance is preferably 10 or less. For example, as for an ethylene group, the distance between the two bonds is "2". As for the divalent organic group, the distance between the two bonds is more preferably 9 or less, further preferably 8 or less.

The linear linking group having bonds at both ends is preferably one or a combination of two or more selected from a linear alkylene group, -NH-, and - C(=O)-. The linear alkylene group is preferably a linear alkylene group having 1 to 8 carbon atoms, and more preferably a linear alkylene group having 1 to 6 carbon atoms.

The side chain that the linear linking group may have is preferably a substituent or a hydrocarbon group optionally having a substituent. Examples of the substituent include a hydroxy group; a carboxyl group; an amino group; - CONH₂; a guanidino group; a thiol group; an imidazole group; an indole group; and a trialkoxysilyl group such as a trimethoxysilyl group and a triethoxysilyl group. Although a hydrogen atom is not generally classified as a side chain, when the linear linking group is derived from a natural α-amino acid, a hydrogen atom is also classified as a side chain, and the linear linking group derived from a natural α-amino acid always has a side chain.

The hydrocarbon group may be either an aliphatic hydrocarbon group or an aromatic hydrocarbon group, or may be a combined group of an aliphatic hydrocarbon group and an aromatic hydrocarbon group. Furthermore, -S- or - C(=O)- may be inserted between the carbon-carbon bond of the hydrocarbon group.

The aliphatic hydrocarbon group may be either a saturated aliphatic hydrocarbon group or an unsaturated aliphatic hydrocarbon group, and is preferably a saturated aliphatic hydrocarbon group. Examples of the saturated aliphatic hydrocarbon group include a linear or branched saturated aliphatic hydrocarbon group such as a methyl group, an ethyl group, a propyl group, an isopropyl group, an isobutyl group, a butyl group, a tert-butyl group, a hexyl group, a heptyl group, and an octyl group; and a cyclic saturated aliphatic hydrocarbon group such as a cyclopropyl group, a 1-methylcyclopropyl group, a cyclopentyl group, a cyclohexyl group, a 1,2-dimethylcyclohexyl group, and a cyclooctyl group.

Examples of the aromatic hydrocarbon group include a phenyl group, a naphthyl group, an anthryl group, and a phenanthryl group.

The divalent organic group is preferably a group represented by the following formula L³.

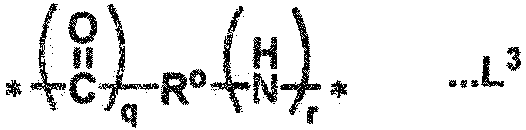

In the formula L³, wherein R^{o} represents a linear alkylene group having 1 to 10 carbon atoms and optionally having a side chain; q and r each independently represent 0 or 1; and the * on the left side represents a bond with a sulfur atom, and the * on the right side represents the other bond.

In the formula L³, R^{o} is preferably a linear alkylene group having 1 to 8 carbon atoms, and more preferably a linear alkylene group having 1 to 6 carbon atoms.

As the side chain that R^{o} may optionally have, the groups exemplified as a substituent or a hydrocarbon group optionally having a substituent in the above-mentioned L¹ can be given. Among them, a natural α-amino acid side-chain group or a group derived from a natural α-amino acid side-chain group is preferable. The natural α-amino acid side-chain group means a functional group located in a side chain of a natural α-amino acid. Specific examples thereof include -(CH₂)₃-NH-C(NH₂)(=NH) (arginine side-chain group),-(CH₂)₄NH₂ (lysine side-chain group), -CH₂OH (serine side-chain group), -CHOHCH₃ (threonine side-chain group), -CH₂-C₆H₄-OH (tyrosine side-chain group), -CH₂CONH₂ (asparagine side-chain group), -CH₂COOH (aspartic acid side-chain group), - (CH₂)₂CONH₂ (glutamine side-chain group), -(CH₂)₂COOH (glutamic acid side-chain group), -CH₂SH (cysteine side-chain group), -H (glycine side-chain group), - CH₃ (alanine side-chain group), -CH₂C(C=CH-N=CH-NH-) (histidine side-chain group), -CH(CH₃)CH₂CH₃ (isoleucine side-chain group), -CH₂CH(CH₃)₂ (leucine side-chain group), -(CH₂)₂SCH₃ (methionine side-chain group), -CH₂C₆H₅ (phenylalanine side-chain group), -CH₂-C(C=CH-NH-Ph-) (tryptophan side-chain group), and -CH(CH₃)₂ (valine side-chain group).

In the formula L³, q is preferably 1.

In the formula L³, r is preferably 1.

In the formula L³, when q and r are 1, and R^{o} is a methylene group having a natural α-amino acid side-chain group or a group derived from a natural α-amino acid side-chain group as a side chain, a natural α-amino acid can be used as a raw material. Therefore, as one embodiment of the present invention, the organosilicon compound of the present invention can be produced from a sustainable material, which is required in light of depletion of fossil fuels and utilization of natural resources.

In the general formula [A], R^{e}, R^{f} and R^{g} are each independently a monovalent hydrocarbon group having 1 to 10 carbon atoms. Examples of the monovalent hydrocarbon group having 1 to 10 carbon atoms include a linear or branched saturated aliphatic hydrocarbon group such as a methyl group, an ethyl group, a propyl group, an isopropyl group, a butyl group, a tert-butyl group, a hexyl group, a heptyl group, and an octyl group; a cyclic saturated aliphatic hydrocarbon group such as a cyclopropyl group, a 1-methylcyclopropyl group, a cyclopentyl group, and a cyclohexyl group; an unsaturated aliphatic hydrocarbon group such as a vinyl group, a propenyl group, a butenyl group, and a pentenyl group; and an aromatic hydrocarbon group such as a phenyl group, a naphthyl group, a tolyl group, a xylyl group, and a trimethylphenyl group. Among these, a linear or branched saturated aliphatic hydrocarbon group having 1 to 8 carbon atoms is preferable, a linear saturated aliphatic hydrocarbon group having 1 to 5 carbon atoms is more preferable, and a linear saturated aliphatic hydrocarbon group having 1 to 3 carbon atoms is further preferable.

In the general formula [A], p1 is preferably 1.

The organosilicon compound represented by the general formula [B] will be described in detail. 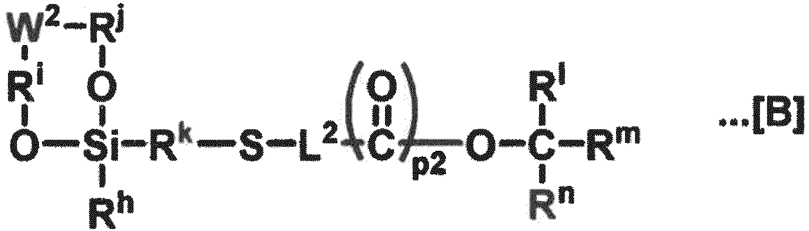
In the general formula [B], R^{h} is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
Rⁱ and R^{j} are each independently a substituted or unsubstituted alkylene group having 1 to 8 carbon atoms;
W² is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
R^{k} is a substituted or unsubstituted divalent hydrocarbon group having 1 to 18 carbon atoms and optionally having an aromatic ring;
L² is a single bond or a divalent organic group;
R¹, R^{m} and Rⁿ are each independently a monovalent hydrocarbon group having 1 to 10 carbon atoms; and
p2 is 0 or 1.

In the general formula [B], examples of R^{h} include the same groups as the groups described as R^{a} to R^{c} in the general formula [A].

In the general formula [B], Rⁱ and R^{j} are, each independently, preferably a substituted or unsubstituted alkylene group having 1 to 4 carbon atoms.

R¹³, R¹⁴ and R¹⁵ are preferably a substituted or unsubstituted alkyl group having 1 to 8 carbon atoms or hydrogen.

In the general formula [B], examples of R^{k} include the same groups as the groups described as R^{d} in the general formula [A].

In the general formula [B], examples of L² include the same groups as the groups described as L¹ in the general formula [A].

In the general formula [B], examples of R¹, R^{m} and Rⁿ include the same groups as the groups described as R^{e}, R^{f} and R^{g} in the general formula [A].

In the general formula [B], p2 is preferably 1.

The organosilicon compound represented by the general formula [1] will be described in detail. 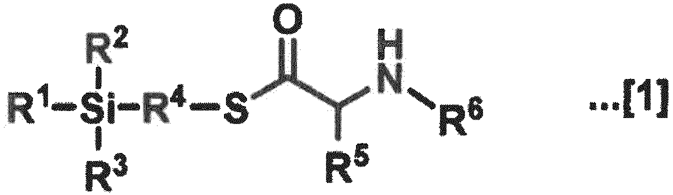
In the general formula [1], R¹, R², and R³ are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R¹, R², and R³ is any of a substituted or unsubstituted alkoxy group having 1 to 18 carbon atoms, a hydroxy group, a polyalkylene glycol monoalkyl ether group represented by CaH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
R⁴ is a substituted or unsubstituted divalent hydrocarbon group having 1 to 18 carbon atoms and optionally having an aromatic ring;
R⁵ is hydrogen or an organic group; and
R⁶ is hydrogen or an amino-protecting group.

In the general formula [1], R¹, R², and R³ are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6. and c is 1 to 18, a carboxyl group having 2 to 18 carbon atoms, and a halogen atom; preferably any of a substituted or unsubstituted alkyl group having 1 to 8 carbon atoms, a substituted or unsubstituted alkoxy group having 1 to 12 carbon atoms, a siloxy group having a substituted or unsubstituted alkyl group having 1 to 8 carbon atoms, a siloxy group having a substituted or unsubstituted alkoxy group having 1 to 4 carbon atoms, an aminoalkoxy group having 1 to 12 carbon atoms, an alkylaminoalkoxy group having 2 to 12 carbon atoms, a dialkylaminoalkoxy group having 3 to 12 carbon atoms, and a polyalkylene glycol monoalkyl ether group represented by CₐH₂ₐ₊₁O-((CH₂)_{b}O)_{c} wherein a is 4 to 18, b is 2 to 4, and c is 1 to 12; and particularly preferably any of a substituted or unsubstituted alkyl group having 1 to 4 carbon atoms, a substituted or unsubstituted alkoxy group having 1 to 8 carbon atoms, a siloxy group having a substituted or unsubstituted alkyl group having 1 to 4 carbon atoms, a siloxy group having a substituted or unsubstituted alkoxy group having 1 to 2 carbon atoms, an aminoalkoxy group having 1 to 12 carbon atoms, an alkylaminoalkoxy group having 2 to 12 carbon atoms, a dialkylaminoalkoxy group having 3 to 12 carbon atoms, and a polyalkylene glycol monoalkyl ether group represented by CₐH₂ₐ₊₁O-((CH₂)_{b}O)_{c} wherein a is 4 to 18, b is 2 to 4, and c is 1 to 8.

At least one of R¹, R², and R³ is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom; preferably any of a substituted or unsubstituted alkoxy group having 1 to 12 carbon atoms, a hydroxy group, a polyalkylene glycol monoalkyl ether group represented by CₐH₂ₐ₊₁O-((CH₂)_{b}O)_{c} wherein a is 2 to 18, b is 2 to 6, and c is 2 to 18, an aminoalkoxy group having 2 to 12 carbon atoms, an alkylaminoalkoxy group having 2 to 12 carbon atoms, and a dialkylaminoalkoxy group having 3 to 12 carbon atoms; particularly preferably any of a substituted or unsubstituted alkoxy group having 1 to 8 carbon atoms, a polyalkylene glycol monoalkyl ether group represented by CₐH₂ₐ₊₁O-((CH₂)_{b}O)_{c} wherein a is 4 to 18, b is 2 to 6, and c is 2 to 18, an aminoalkoxy group having 2 to 12 carbon atoms, an alkylaminoalkoxy group having 3 to 12 carbon atoms, and a dialkylaminoalkoxy group having 4 to 12 carbon atoms.

In the general formula [1], R⁴ is a substituted or unsubstituted divalent hydrocarbon group having 1 to 18 carbon atoms and optionally having an aromatic ring, preferably a substituted or unsubstituted divalent hydrocarbon group having 1 to 12 carbon atoms and optionally having an aromatic ring, and particularly preferably a substituted or unsubstituted alkylene group having 1 to 8 carbon atoms.

In the general formula [1], R⁵ is hydrogen or an organic group. As examples of the organic group, a natural α-amino acid side-chain group and a group derived from a natural α-amino acid side-chain group can be given. The natural α-amino acid side-chain group means a functional group located in a side chain of a natural α-amino acid. Specific examples thereof include -(CH₂)₃-NH-C(NH₂)(=NH) (arginine side-chain group), -(CH₂)₄NH₂ (lysine side-chain group), - CH₂OH (serine side-chain group), -CHOHCH3 (threonine side-chain group), -CH₂-C₆H₄-OH (tyrosine side-chain group), -CH₂CONH₂ (asparagine side-chain group), -CH₂COOH (aspartic acid side-chain group), -(CH₂)₂CONH₂ (glutamine side-chain group), -(CH₂)₂COOH (glutamic acid side-chain group), -CH₂SH (cysteine side-chain group), -H (glycine side-chain group), -CH₃ (alanine side-chain group), -CH₂C(C=CH-N=CH-NH-) (histidine side-chain group), -CH(CH₃)CH₂CH₃ (isoleucine side-chain group), -CH₂CH(CH₃)₂ (leucine side-chain group), - (CH₂)₂SCH₃ (methionine side-chain group), -CH₂C₆H₅ (phenylalanine side-chain group), -CH₂-C(C=CH-NH-Ph-) (tryptophan side-chain group), and -CH(CH₃)₂ (valine side-chain group). R⁵ is preferably hydrogen, a substituted or unsubstituted alkyl group, a substituted or unsubstituted alkyl group having a thioether (-S-), or a substituted or unsubstituted aromatic group, and more preferably hydrogen, a substituted or unsubstituted alkyl group having 1 to 5 carbon atoms, a substituted or unsubstituted alkyl group having 1 to 5 carbon atoms and having a thioether (-S-) and, or a substituted or unsubstituted aromatic group having 6 to 10 carbon atoms.

In the general formula [1], R⁶ is hydrogen or an amino-protecting group. The amino-protecting group is not particularly limited as long as it acts as an amino-protecting group. Examples of the amino-protecting group include a tert-butyloxycarbonyl group, a benzyloxycarbonyl group, a 9-fluorenylmethyloxycarbonyl group, an acetyl group, a benzoyl group, a benzyl group, a 4-dimethylaminoazobenzene-4'-sulfonyl group, a 5-dimethylaminonaphthalene-1-sulfonyl group, a 2,4-dinitrophenyl group, a 2-nitrophenylsulfenyl group, a chloroacetyl group, and a formyl group. R⁶ is preferably hydrogen, a tert-butyloxycarbonyl group, a benzyloxycarbonyl group, or an acetyl group.

In the general formula [1], examples of the substituent that can substitute include an alkyl group such as methyl, ethyl, and isopropyl, an aryl group such as phenyl, an aralkyl group such as benzyl, an unsaturated hydrocarbon group such as a vinyl group, a halogeno group such as a fluoro group, a chloro group, a bromo group, and an iodine group, an amino group, and a nitro group. 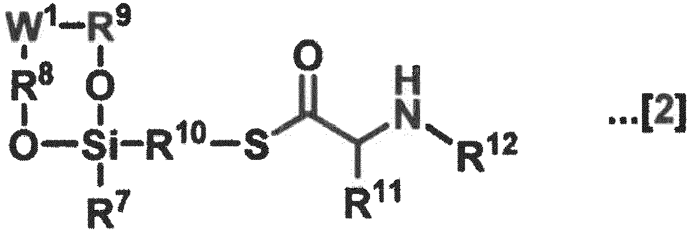
In the general formula [2], R⁷ is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
R⁸ and R⁹ are each independently a substituted or unsubstituted alkylene group having 1 to 8 carbon atoms;
W¹ is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
R¹⁰ is a substituted or unsubstituted divalent hydrocarbon group having 1 to 18 carbon atoms and optionally having an aromatic ring;
R¹¹ is hydrogen or an organic group; and
R¹² is hydrogen or an amino-protecting group.

In the general formula [2], R⁷ is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom; preferably any of a substituted or unsubstituted alkyl group having 1 to 8 carbon atoms, a substituted or unsubstituted alkoxy group having 1 to 12 carbon atoms, a siloxy group having a substituted or unsubstituted alkyl group having 1 to 8 carbon atoms, a siloxy group having a substituted or unsubstituted alkoxy group having 1 to 4 carbon atoms, an aminoalkoxy group having 1 to 12 carbon atoms, an alkylaminoalkoxy group having 2 to 12 carbon atoms, a dialkylaminoalkoxy group having 3 to 12 carbon atoms, and a polyalkylene glycol monoalkyl ether group represented by CₐH₂ₐ₊₁O-((CH₂)_{b}O)_{c} wherein a is 4 to 18, b is 2 to 4, and c is 1 to 12; and particularly preferably any of a substituted or unsubstituted alkyl group having 1 to 4 carbon atoms, a substituted or unsubstituted alkoxy group having 1 to 8 carbon atoms, a siloxy group having a substituted or unsubstituted alkyl group having 1 to 4 carbon atoms, a siloxy group having a substituted or unsubstituted alkoxy group having 1 to 2 carbon atoms, an aminoalkoxy group having 1 to 12 carbon atoms, an alkylaminoalkoxy group having 2 to 12 carbon atoms, a dialkylaminoalkoxy group having 3 to 12 carbon atoms, and a polyalkylene glycol monoalkyl ether group represented by CₐH₂ₐ₊₁O-((CH₂)_{b}O)_{c} wherein a is 4 to 18, b is 2 to 4, and c is 1 to 8.

In the general formula [2], R⁸ and R⁹ are a substituted or unsubstituted alkylene group having 1 to 8 carbon atoms, and preferably a substituted or unsubstituted alkylene group having 1 to 4 carbon atoms.

R¹³, R¹⁴ and R¹⁵ are a substituted or unsubstituted alkyl group having 1 to 18 carbon atoms or hydrogen; and preferably a substituted or unsubstituted alkyl group having 1 to 8 carbon atoms or hydrogen.

In the general formula [2], R¹⁰ is a substituted or unsubstituted divalent hydrocarbon group having 1 to 18 carbon atoms and optionally having an aromatic ring, preferably a substituted or unsubstituted divalent hydrocarbon group having 1 to 12 carbon atoms and optionally having an aromatic ring, and particularly preferably a substituted or unsubstituted alkylene group having 1 to 8 carbon atoms.

In the general formula [2], R¹¹ is hydrogen or an organic group. As examples of the organic group, a natural α-amino acid side-chain group and a group derived from a natural α-amino acid side-chain group can be given. The natural α-amino acid side-chain group means a functional group located in a side chain of a natural α-amino acid. Specific examples thereof include -(CH₂)₃-NH-C(NH₂)(=NH) (arginine side-chain group), -(CH₂)₄NH₂ (lysine side-chain group), - CH₂OH (serine side-chain group), -CHOHCH₃ (threonine side-chain group), -CH₂-C₆H₄-OH (tyrosine side-chain group), -CH₂CONH₂ (asparagine side-chain group), -CH₂COOH (aspartic acid side-chain group), -(CH₂)₂CONH₂ (glutamine side-chain group), -(CH₂)₂COOH (glutamic acid side-chain group), -CH₂SH (cysteine side-chain group), -H (glycine side-chain group), -CH₃ (alanine side-chain group), -CH₂C(C=CH-N=CH-NH-) (histidine side-chain group), -CH(CH₃)CH₂CH₃ (isoleucine side-chain group), -CH₂CH(CH₃)₂ (leucine side-chain group), - (CH₂)₂SCH₃ (methionine side-chain group), -CH₂C₆H₅ (phenylalanine side-chain group), -CH₂-C(C=CH-NH-Ph-) (tryptophan side-chain group), and -CH(CH₃)₂ (valine side-chain group). R¹¹ is preferably hydrogen, a substituted or unsubstituted alkyl group, a substituted or unsubstituted alkyl group having a thioether (-S-), or a substituted or unsubstituted aromatic group, and more preferably hydrogen, a substituted or unsubstituted alkyl group having 1 to 5 carbon atoms, a substituted or unsubstituted alkyl group having 1 to 5 carbon atoms and having a thioether (-S-), or a substituted or unsubstituted aromatic group having 6 to 10 carbon atoms.

In the general formula [2], R¹² is hydrogen or an amino-protecting group. The amino-protecting group is not particularly limited as long as it acts as an amino-protecting group. Examples of the amino-protecting group include a tert-butyloxycarbonyl group, a benzyloxycarbonyl group, a 9-fluorenylmethyloxycarbonyl group, an acetyl group, a benzoyl group, a benzyl group, a 4-dimethylaminoazobenzene-4'-sulfonyl group, a 5-dimethylaminonaphthalene-1-sulfonyl group, a 2,4-dinitrophenyl group, a 2-nitrophenylsulfenyl group, a chloroacetyl group, and a formyl group. R¹² is preferably hydrogen, a tert-butyloxycarbonyl group, a benzyloxycarbonyl group, or an acetyl group.

In the general formula [2], examples of the substituent that can substitute include an alkyl group such as methyl, ethyl, and isopropyl, an aryl group such as phenyl, an aralkyl group such as benzyl, an unsaturated hydrocarbon group such as a vinyl group, a halogeno group such as a fluoro group, a chloro group, a bromo group, and an iodine group, an amino group, and a nitro group.

The organosilicon compound of the present invention may be a condensate (oligomer) obtained by subjecting at least one organosilicon compound selected from organosilicon compounds represented by the general formulas [A], [B], [1], and [2] to condensation reaction after hydrolysis or to condensation reaction with other components. As the other components, a divalent or higher-valent alkylpolyol having 1 to 60 carbon atoms and optionally containing a nitrogen atom in a molecule thereof and/or a divalent or higher-valent (poly)alkyl ether polyol having 2 to 60 carbon atoms and optionally containing a nitrogen atom in a molecule thereof can be exemplified, an alkylpolyol having 2 to 60 carbon atoms and/or a (poly)alkyl ether polyol having 2 to 60 carbon atoms are preferable, and an alkylpolyol having 2 to 30 carbon atoms and/or a (poly)alkyl ether polyol having 2 to 30 carbon atoms are more preferable.

Examples of the divalent or higher-valent alkylpolyol having 1 to 60 carbon atoms and optionally containing a nitrogen atom in a molecule thereof include ethylene glycol, propylene glycol, 1,3-propanediol, 1,4-butanediol, 2-methyl-1,3-propanediol, glycerin, trimethylolpropane, pentaerythritol, sorbitol, diethanolamine, methyldiethanolamine, butyldiethanolamine, and triethanolamine. Examples of the divalent or higher-valent (poly)alkyl ether polyol having 2 to 60 carbon atoms and optionally containing a nitrogen atom in a molecule thereof include diethylene glycol, polyethylene glycol, dipropylene glycol, and polypropylene glycol.

In the organosilicon compound of the present invention, in the general formula [A], preferably, R^{a}, R^{b}, and R^{c} are each independently a substituted or unsubstituted alkoxy group having 1 to 18 carbon atoms, R^{d} is a substituted or unsubstituted divalent hydrocarbon group having 1 to 18 carbon atoms, L¹ is a single bond or a group represented by the formula L³, and R^{e}, R^{f}, and R^{g} are each independently a linear saturated aliphatic hydrocarbon group having 1 to 5 carbon atoms; and particularly preferably, R^{a}, R^{b}, and R^{c} are selected from a methoxy group and an ethoxy group, R^{d} is a trimethylene group, L¹ is a single bond or a group represented by the formula L³ wherein R^{o} is a linear alkylene group having 1 to 6 carbon atoms and optionally having a natural α-amino acid side-chain group or a group derived from a natural α-amino acid side-chain group, and R^{e}, R^{f}, and R^{g} are a methyl group.

In the organosilicon compound of the present invention, in the general formula [1], preferably, R¹, R², and R³ are each independently a substituted or unsubstituted alkoxy group having 1 to 18 carbon atoms, and R⁴ is a substituted or unsubstituted divalent hydrocarbon group having 1 to 18 carbon atoms; and particularly preferably R¹, R², and R³ are selected from a methoxy group and an ethoxy group, and R⁴ is a trimethylene group.

The production method of the organosilicon compound of the present invention is not particularly limited. As the production method of the organosilicon compounds represented by the general formulas [1] and [2], for example, a production method by the reaction of a mercaptosilane with an N-protected amino acid in the presence of a carbodiimide condensing agent and a base can be exemplified.

The N-protected amino acid is an amino acid of which amino group is protected with a known protecting group including, for example, the amino-protecting group described above. Specific examples of the N-protected amino acid include, but are not limited to, a BOC-protected natural α-amino acid such as BOC-alanine, BOC-valine, BOC-leucine, BOC-isoleucine, BOC-glutamic acid, BOC-phenylalanine, and BOC-methionine; a Z-protected natural α-amino acid such as Z-alanine, Z-valine, Z-leucine, Z-isoleucine, Z-glutamic acid, Z-phenylalanine, and Z-methionine; and an AC-protected natural α-amino acid such as AC-alanine, AC-valine, AC-leucine, AC-isoleucine, AC-glutamic acid, AC-phenylalanine, and AC-methionine. Note that BOC is an abbreviation for a tert-butyloxycarbonyl group, Z is an abbreviation for a benzyloxycarbonyl group, and AC is an abbreviation for an acetyl group.

Specific examples of the mercaptosilane include, but are not limited to, 3-mercaptopropyltrimethoxysilane and 3-mercaptopropyltriethoxysilane.

The using amount of the mercaptosilane is preferably 0.3 to 5.0 molar equivalents, more preferably 0.5 to 3.0 molar equivalents, and particularly preferably 0.6 to 2.5 molar equivalents, relative to the N-protected amino acid.

Examples of the carbodiimide condensing agent include N,N'-dicyclohexylcarbodiimide (DCC), N,N'-diisopropylcarbodiimide (DIC), 1-ethyl-3-(3-dimethylaminopropyl)carbodiimide hydrochloride (EDC·HCl) 1,3-bis(2,2-dimethyl-1,3-dioxolan-4-ylmethyl)carbodiimide (BDDC), and 1-tert-butyl-3-ethylcarbodiimide (BEC). These carbodiimide condensing agents may be used alone or in combination of two or more.

The using amount of the carbodiimide condensing agent is preferably 0.5 to 10 molar equivalents, and more preferably 0.8 to 3.0 molar equivalents, relative to the mercaptosilane.

Examples of the base include N,N-dimethyl-4-aminopyridine, trimethylamine, triethylamine, tributylamine, trioctylamine, and pyridine. These bases may be used alone or in combination of two or more.

The using amount of the base is preferably 0.01 to 10 molar equivalents, and more preferably 0.05 to 1.0 molar equivalents, relative to the mercaptosilane.

The reaction of the mercaptosilane with the N-protected amino acid is preferably carried out in a solvent. Examples of the solvent include a chlorinated hydrocarbon such as dichloromethane, 1,2-dichloroethane, chloroform, monochlorobenzene, and dichlorobenzene; an aromatic hydrocarbon such as benzene, toluene, and xylene; and an amide solvent such as N,N-dimethylformamide, N,N-dimethylacetamide, and N-methylpyrrolidone.

The using amount of the solvent is preferably 0.3 to 100 times by mass, and more preferably 0.5 to 40 times by mass, relative to the mercaptosilane.

The reaction conditions are not limited, but the reaction temperature is usually 0°C to 60°C, and the reaction time is preferably about 1 hour to 24 hours.

For example, among the organosilicon compounds represented by the general formulas [A] and [B], the organosilicon compounds wherein L¹ and L² are a group represented by the formula L³ wherein q and r are 1 can be produced by the same method as the production method of the organosilicon compounds represented by the general formulas [1] and [2]. As the N-protected amino acid, in addition to the above-mentioned BOC-protected natural α-amino acid, BOC-β-alanine, BOC-γ-aminobutyric acid, BOC-6-aminohexanoic acid, and the like can be used.

Furthermore, among the organosilicon compounds represented by the general formulas [A] and [B], the organosilicon compounds wherein L¹ and L² are a single bond, p1 and p2 are 1, and R^{e} to R^{g} and R¹ to Rⁿ are a methyl group can be produced, for example, by the reaction of a mercaptosilane with di-tert-butyl dicarbonate in the presence of a base.

Specific examples of the mercaptosilane include, but are not limited to, 3-mercaptopropyltrimethoxysilane and 3-mercaptopropyltriethoxysilane.

The using amount of the mercaptosilane is preferably 0.1 to 3.0 molar equivalents, more preferably 0.3 to 2.0 molar equivalents, and particularly preferably 0.5 to 1.5 molar equivalents, relative to the di-tert-butyl dicarbonate.

Examples of the base include sodium carbonate and potassium carbonate. These bases may be used alone or in combination of two or more. The using amount of the base is preferably 1 to 10 molar equivalents, and more preferably 1.5 to 5.0 molar equivalents, relative to the mercaptosilane.

The reaction of a mercaptosilane with di-tert-butyl dicarbonate is preferably carried out in a solvent. Examples of the solvent include a chlorinated hydrocarbon such as dichloromethane, 1,2-dichloroethane, chloroform, monochlorobenzene, and dichlorobenzene; an aromatic hydrocarbon such as benzene, toluene, and xylene; an amide solvent such as N,N-dimethylformamide, N,N-dimethylacetamide, and N-methylpyrrolidone; a nitrile solvent such as acetonitrile: and an ether solvent such as diethyl ether, diethylene glycol dimethyl ether, 1,4-dioxane, and tetrahydrofuran.

The using amount of the solvent is preferably 0.3 to 100 times by mass, and more preferably 1 to 50 times by mass, relative to the mercaptosilane.

The reaction conditions are not limited, but the reaction temperature is usually 0°C to 60°C, and the reaction time is preferably about 12 hours to 72 hours.

The above organosilicon compound represented by the general formula [A], [B], [1], or [2], or the above condensate containing at least one organosilicon compound selected from the organosilicon compounds represented by the general formulas [A], [B], [1], and [2] as a condensation component is used not only for tires but also for rubbers such as an anti-vibration rubber, a rubber floor, a roll, a packing, a sealing material, and an O-ring, and further, can be used for parts of an electronic device such as a semiconductor sealing material.

Next, the rubber composition of the present invention will be described. The rubber composition comprises a rubber, a silica filler, and the organosilicon compound represented by the general formula [A], [B], [1], or [2] of the present invention, or the condensate containing at least one organosilicon compound selected from organosilicon compounds represented by the general formulas [A], [B], [1], and [2] of the present invention as a condensation component.

### [Rubber, Silica Filler]

The rubber used in the rubber composition of the present invention is not particularly limited. Examples of the rubber include natural rubber (NR); diene rubbers such as polyisoprene rubber (IR), various styrene-butadiene copolymer rubbers (SBR), polybutadiene rubber (BR), various acrylonitrile-butadiene copolymer rubbers (NBR), and chloroprene rubber (CR); and non-diene rubbers such as various ethylene-propylene copolymer rubbers (EPDM) and butyl rubber (IIR). Among these, diene rubbers are preferable. The rubbers can be used alone or as a blend of two or more at an arbitrary mixing ratio. NR, IR and SBR are particularly preferable, and in the case of blending, at least one rubber selected from NR, IR and SBR may be contained as a rubber component in an amount of 10 to 90% by mass.

The silica filler used in the rubber composition of the present invention is preferably wet silica and/or dry silica having a BET specific surface area of 10 to 400 m²/g, more preferably wet silica having a BET specific surface area of 20 to 300 m²/g, further preferably dry silica having a BET specific surface area of 50 to 300 m²/g, and particularly preferably wet silica having a BET specific surface area of 80 to 250 m²/g. The BET specific surface area can be measured by using a measurement device "Tristar II3020" manufactured by Shimadzu Corporation according to the protocol attached to the device.

In the rubber composition of the present invention, the content of the silica filler is preferably 10 to 150 parts by mass, more preferably 20 to 150 parts by mass, further preferably 20 to 120 parts by mass, still further preferably 40 to 120 parts by mass, and particularly preferably 60 to 120 parts by mass, relative to 100 parts by mass of the rubber.

### [Organosilicon Compound Represented by General Formula [A], [B], [1], or [2], or Condensate Containing at Least One Organosilicon Compound Selected from Organosilicon Compounds Represented by General Formulas [A], [B], [1], and [2] as Condensation Component]

The rubber composition of the present invention contains, as an organosilicon compound, an organosilicon compound represented by the above general formula [A], [B], [1], or [2], or a condensate containing at least one organosilicon compound selected from organosilicon compounds represented by the above general formulas [A], [B], [1], and [2] as a condensation component.

In the rubber composition of the present invention, the organosilicon compound represented by the general formula [A], [B], [1], or [2], or the condensate containing at least one organosilicon compound selected from organosilicon compounds represented by the general formulas [A], [B], [1], and [2] as a condensation component is preferably contained in an amount of 1 to 30 parts by mass, more preferably 2 to 25 parts by mass, and particularly preferably 3 to 15 parts by mass, relative to 100 parts by mass of the rubber.

### [Other Organosilicon Compounds]

The rubber composition of the present invention may contain at least one selected from a vinyl organosilicon compound, an amino organosilicon compound, an alkyl organosilicon compound, an epoxy organosilicon compound, a methacrylic organosilicon compound, a (protected) mercapto organosilicon compound, a (poly)sulfide organosilicon compound, and condensates thereof (hereinafter, these organosilicon compounds may be collectively referred to as "other organosilicon compounds").

When the rubber composition of the present invention contains the other organosilicon compounds, namely, at least one selected from a vinyl organosilicon compound, an amino organosilicon compound, an alkyl organosilicon compound, an epoxy organosilicon compound, a methacrylic organosilicon compound, a (protected) mercapto organosilicon compound, a (poly)sulfide organosilicon compound, and condensates thereof, the other organosilicon compounds are preferably added in an amount of 0.1 to 20 parts by mass, more preferably 0.5 to 15 parts by mass, further preferably 0.5 to 10 parts by mass, and still further preferably 0.5 to 5.0 parts by mass, relative to 100 parts by mass of the silica filler.

Examples of the vinyl organosilicon compound include vinyltrimethoxysilane, vinyltriethoxysilane, vinyltris(2-methoxyethoxy)silane, allyltrichlorosilane, allyltrimethoxysilane, allyltriethoxysilane, diethoxymethylvinylsilane, trichlorovinylsilane, and triethoxyvinylsilane.

Examples of the amino organosilicon compound include 3-aminopropyltriethoxysilane, 3-aminopropyltrimethoxysilane, N-(2-aminoethyl)-3-aminopropyltrimethoxysilane, N-(2-aminoethyl)-3-aminopropylmethyldimethoxysilane, and 3-(N-phenyl)aminopropyltrimethoxysilane.

Examples of the alkyl organosilicon compound include methyltrimethoxysilane, dimethyldiethoxysilane, propyltriethoxysilane, hexyltrimethoxysilane, octyltriethoxysilane, and hexamethyldisilazane.

Examples of the epoxy organosilicon compound include 2-(3,4-epoxycyclohexyl)ethyltrimethoxysilane, 3-glycidoxypropyltrimethoxysilane, and 3-glycidoxypropyltriethoxysilane.

Examples of the methacrylic organosilicon compound include 3-methacryloxypropyltriethoxysilane and 3-methacryloxypropyltrimethoxysilane.

Examples of the (poly)sulfide organosilicon compound include a polysulfide silane coupling agent represented by the following general formula [3]:

(R¹⁶-O)₃₋ₘ(R¹⁶)ₘ-Si-R¹⁷-S₁-R¹⁷-Si-(R¹⁶)ₘ(O-R¹⁶)₃₋ₘ [3]

wherein R¹⁶ are independently an alkyl group having 1 to 18 carbon atoms or a polyalkylene glycol monoalkyl ether group represented by CₐH₂ₐ₊₁O-((CH₂)_{b}O)_{c} wherein a is 1 to 18, b is 1 to 6, and c is 1 to 18, R¹⁷ are an alkylene group having 1 to 9 carbon atoms or a divalent phenyl group, 1 is an integer of 1 to 9, and m is an integer of 0, 1 or 2.

As the (poly)sulfide organosilicon compound, bis(3-triethoxysilylpropyl)disulfide and bis(3-triethoxysilylpropyl)tetrasulfide are particularly preferable

Examples of the (protected) mercapto organosilicon compound include a mercapto organosilicon compound having a mercapto group such as 3-mercaptopropyltrimethoxysilane and 3-mercaptopropyltriethoxysilane; and a protected mercapto organosilicon compound which is an organosilicon compound of which mercapto group is protected and thereby which has no mercapto group as a compound, such as 3-octanoylthio-1-propyltriethoxysilane and 3-propionylthiopropyltrimethoxysilane. The protected mercapto organosilicon compound will have a mercapto group later as a result of adding heat, a chemical agent, and the like.

The (protected) mercapto organosilicon compound is preferably a compound represented by the following general formula [4]:

R¹⁸ₙ(R¹⁹)₃₋ₙ-Si-R²⁰-SH [4].

In the general formula [4], R¹⁸ are each independently a hydrocarbon group, preferably an alkyl group having 1 to 6 carbon atoms, and more preferably an alkyl group having 1 to 3 carbon atoms.

In the general formula [4], R¹⁹ are each independently an alkoxy group, preferably an alkoxy group having 1 to 8 carbon atoms, and more preferably an alkoxy group having 1 to 3 carbon atoms.

In the general formula [4], R²⁰ is a divalent hydrocarbon group, preferably a divalent hydrocarbon group having 1 to 18 carbon atoms, and more preferably an alkylene group having 1 to 4 carbon atoms.

In the general formula [4], n is 0, 1, or 2.

Specific examples of other organosilicon compounds used in combination include, but are not limited to, CABURUS-2 and CABURUS-4 corresponding to the compound represented by the above general formula [3], manufactured by Osaka Soda Co., Ltd.,; S330, which is 3-aminopropyltriethoxysilane, manufactured by JNC Corporation; Si-75 corresponding to the above-mentioned CABURUS-2, Si-69 corresponding to the above-mentioned CABURUS-4, and Si-363 represented by the following formula [5], manufactured by Degussa; A-1289 corresponding to the above-mentioned CABURUS-4, A-189, which is 3-mercaptopropyltrimethoxysilane, NXT, and NXT-LowV represented by the following formula [6], manufactured by Momentive; and KBE-846 corresponding to the above-mentioned CABURUS-4, manufactured by Shin-Etsu Chemical Co., Ltd. These may be used alone or in combination of two or more.

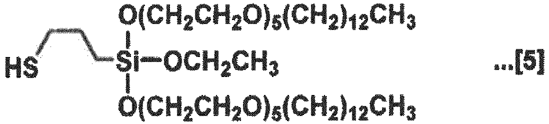

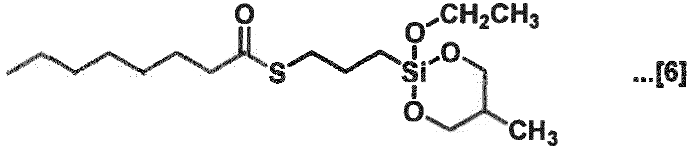

Preferably, the total mass of the organosilicon compound of the present invention and at least one selected from the vinyl organosilicon compound, the amino organosilicon compound, the alkyl organosilicon compound, the epoxy organosilicon compound, the methacrylic organosilicon compound, the (protected) mercapto organosilicon compound, the (poly)sulfide organosilicon compound, and condensates thereof does not exceed 30 parts by mass relative to 100 parts by mass of the silica filler.

In the production of the rubber composition of the present invention, kneading is preferably performed at 80°C to 250°C, and more preferably 80°C to 200°C. The kneading time is not particularly limited, and is, for example, 1 minute to 1 hour.

In the present invention, it is preferred that the rubber composition further contains a cross-linking agent. The cross-linking agent is, but is not limited to, particularly preferably at least one selected from sulfur, selenium, an organic peroxide, morpholine disulfide, a thiuram compound and an oxime compound.

The content of the cross-linking agent is preferably 0.1 to 20 parts by mass, more preferably 0.2 to 15 parts by mass, and particularly preferably 0.5 to 10 parts by mass, relative to 100 parts by mass of the rubber.

Hereinafter, the composition after adding the cross-linking agent to the rubber composition of the present invention can be referred to as "crosslinkable rubber composition". The crosslinkable rubber composition is preferably kneaded at 100°C or lower. The kneading time is not particularly limited, and is, for example, 1 minute to 1 hour.

The rubber composition of the present invention may contain compounding ingredients commonly used in the rubber industry in addition to the above-mentioned components unless it departs from the gist of the present invention. For example, a crosslinking accelerator (aid) such as a guanidine crosslinking accelerator, a sulfenamide crosslinking accelerator, and zinc flower (zinc oxide), processing aid, a coupling agent such as a titanate coupling agent, an antiaging agent such as phenyl-α-naphthylamine and N-phenyl-N'-(1,3-dimethylbutyl)-p-phenylenediamine, a filler such as carbon black and calcium carbonate, a reinforcing agent, a softening agent, a plasticizer, a tackifier, an anti-scorch agent, and the like can be used.

Examples of the guanidine crosslinking accelerator include diphenylguanidine and ditolylguanidine.

Examples of the sulfenamide crosslinking accelerator include N-cyclohexyl-2-benzothiazyl sulfenamide, N,N-dicyclohexyl-2-benzothiazyl sulfenamide, N-oxydiethylene-2-benzothiazyl sulfenamide, N-tert-butyl-2-benzothiazyl sulfenamide, and N-tert-butyl-di(2-benzothiazole)sulfenimide.

The compounding amount of the crosslinking accelerator (aid) in the rubber composition of the present invention is preferably 0.1 to 15 parts by mass, more preferably 1 to 10 parts by mass, and particularly preferably 3 to 9 parts by mass, relative to 100 parts by mass of the rubber. The compounding amount of the crosslinking accelerator (aid) is the total amount of compounding ingredients corresponding to a crosslinking accelerator and a crosslinking accelerator aid. When both of a crosslinking accelerator and a crosslinking acceleration aid are used, the compounding amount of the crosslinking accelerator (aid) indicates the total amount of the both.

Examples of the processing aid include a higher fatty acid such as stearic acid, oleic acid, palmitic acid, and lauric acid; a higher fatty acid amide such as stearamide and oleamide; a higher fatty acid ester such as ethyl oleate; and a higher aliphatic amine such as stearylamine and oleylamine.

The compounding amount of the processing aid in the rubber composition of the present invention is, for example, 300 parts by mass or less, preferably 100 parts by mass or less, more preferably 50 parts by mass or less, and particularly preferably 10 parts by mass or less, relative to 100 parts by mass of the rubber.

Examples of the softening agent include a petroleum-derived wax such as carnauba wax and ceresin wax; a polyglycol such as ethylene glycol, glycerin, and diethylene glycol; an aliphatic hydrocarbon such as Vaseline, paraffin, and naphthene; and a silicone oil.

The compounding amount of the softening agent in the rubber composition of the present invention is, for example, 300 parts by mass or less, preferably 100 parts by mass or less, more preferably 50 parts by mass or less, and particularly preferably 30 parts by mass or less, relative to 100 parts by mass of the rubber.

The compounding amount of the antiaging agent in the rubber composition of the present invention is, for example, 30 parts by mass or less, preferably 10 parts by mass or less, and more preferably 5 parts by mass or less, relative to 100 parts by mass of the rubber.

Examples of carbon black include, but are not limited to, SRF, FEF, HAF, ISAF and SAF.

The carbon black is preferably contained in an amount of 0.5 to 100 parts by mass, more preferably 1 to 90 parts by mass, and particularly preferably 2 to 80 parts by mass, relative to 100 parts by mass of the rubber.

The rubber composition (crosslinkable rubber composition) of the present invention may be kneaded with any of various mixing machines commonly used in the rubber industry, such as a roll, a pressure kneader, an inter mixer, and a Banbury mixer.

The crosslinkable rubber composition thus prepared may be formed into a desired shape using an extruder, a calender roll, or a press, and heated preferably at 120°C to 230°C for 1 minute to 3 hours to obtain a crosslinked product (rubber material). A mold may be used in the crosslinking.

The tensile strength at break (TSb) of the rubber material of the present invention is 11 MPa or more, preferably 13.0 MPa or more, more preferably 15.0 MPa or more, and still more preferably 16.0 MPa or more. The upper limit thereof is not particularly limited, but may be 35 MPa or less and may be 25 MPa or less.

The elongation at break (Eb) of the rubber material of the present invention is 200% or more, preferably 240% or more, more preferably 270% or more, still more preferably 280% or more. The upper limit thereof is not particularly limited, but may be 500% or less and may be 400% or less.

The tensile strength at break and the elongation at break can be determined according to the measurement methods of Examples described later.

The rubber material of the present invention is characterized by being excellent in fuel economy and grip performance. A large value of tan δ at 0°C suggests that the grip performance is excellent, and a small value of tan δ at 60°C suggests that the fuel economy is excellent. Usually, as the value of tan δ at 60°C decreases, the value of tan δ at 0°C also tends to decrease. However, the rubber material of the present invention makes it possible to increase the value of tan δ at 0°C while decreasing the value of tan δ at 60°C, as compared with a rubber material using a polysulfide organosilicon compound, which is widely used. The tan δ at 0°C is preferably 0.20 or more, more preferably 0.25 or more, and further preferably 0.28 or more. The upper limit of the tan δ at 0°C is not particularly limited, but may be 0.8 or less or may be 0.5 or less. The tan δ at 60°C is preferably 0.15 or less, and more preferably 0.13 or less. The lower limit of the tan δ at 60°C is not particularly limited, but may be 0.05 or more or may be 0.08 or more. The tan δ can be determined according to the measurement method of Examples described later.

The rubber material of the present invention preferably has excellent abrasion resistance. The abrasion volume per 1000 rotations is, for example 0.4 cc or less, preferably 0.30 cc or less, and more preferably 0.28 cc or less. The lower limit of the abrasion volume is not particularly limited, but may be 0.05 cc or more or may be 0.1 cc or more. The abrasion resistance can be determined according to the measurement method of Examples described later.

The rubber material using the rubber composition of the present invention can be suitably used for rubber parts to be dynamically used, such as a tire (particularly tread part), a belt, and an anti-vibration rubber. The rubber material is preferably a crosslinked product obtained by crosslinking the rubber composition of the present invention.

The present application claims the benefit of priority based on Japanese Patent Application No. 2018-007561 filed on January 19, 2018. The entire contents of the specification of Japanese Patent Application No. 2018-007561 filed on January 19, 2018 are incorporated herein by reference.

### EXAMPLES

Hereinafter, the present invention will be more specifically described with reference to Examples and Comparative Examples. However, the present invention is not limited by the following Examples unless departing from the gist of the present invention, and can also be carried out by appropriately adding modifications within a scope applicable to the gist described above and below, and all such modifications are encompassed within the technical scope of the present invention.

### Example 1: Synthesis of Thioester-Type Triethoxysilane Having BOC-Alanine Residue (Organosilicon Compound 1)

Into a 300 mL three-necked flask equipped with a thermometer and a magnetic stirrer were added 10.0 g (52.9 mmol) of BOC-alanine (N-(tert-butoxycarbonyl)-L-alanine, manufactured by Tokyo Chemical Industry Co., Ltd.), 100 g of dichloromethane (manufactured by Wako Pure Chemical Industries, Ltd.), 12.6 g (52.9 mmol) of 3-mercaptopropyltriethoxysilane (manufactured by Tokyo Chemical Industry Co., Ltd.), and 0.65 g (5.3 mmol) of N,N-dimethyl-4-aminopyridine (manufactured by Wako Pure Chemical Industries, Ltd.). After cooling to 5°C while stirring the contents of the flask with the magnetic stirrer, 12.0 g (58.1 mmol) of N,N'-dicyclohexylcarbodiimide (manufactured by Wako Pure Chemical Industries, Ltd.) was added thereto. Then, the resulting mixture was heated to room temperature and stirred for 3 hours. After the completion of the reaction, the reaction solution was filtered, and the filtrate was concentrated under reduced pressure. The concentrated residue was purified by silica gel chromatography (n-hexane/ethyl acetate = 9/1), whereby 17.1 g (yield 79%) of an organosilicon compound 1 represented by the following formula [7], which was a colorless transparent liquid, was obtained. The physical property is shown below.

¹H-NMR (500 MHz, CDCl₃) δ 5.0-4.9 (m, 1H), 4.4-4.3 (m, 1H), 3.8 (q, J=7.0 Hz, 6H), 2.9 (t, J=7.5 Hz, 2H), 1.8-1.6 (m, 2H), 1.5 (s, 9H), 1.4 (d, J=7.0 Hz, 3H), 1.2 (t, J=7.0 Hz, 9H).

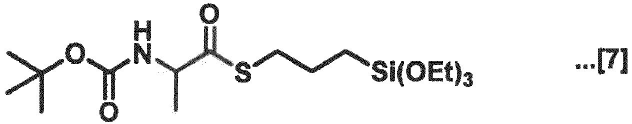

### Example 2: Synthesis of Thioester-Type Triethoxysilane Having BOC-Valine Residue (Organosilicon Compound 3)

Into a 300 mL three-necked flask equipped with a thermometer and a magnetic stirrer were added 10.0 g (46.0 mmol) of BOC-valine (N-(tert-butoxycarbonyl)-L-valine, manufactured by Tokyo Chemical Industry Co., Ltd.), 100 g of dichloromethane (manufactured by Wako Pure Chemical Industries, Ltd.), 11.0 g (46.0 mmol) of 3-mercaptopropyltriethoxysilane (manufactured by Tokyo Chemical Industry Co., Ltd.), and 0.56 g (4.6 mmol) of N,N-dimethyl-4-aminopyridine (manufactured by Wako Pure Chemical Industries, Ltd.). After cooling to 5°C while stirring the contents of the flask with the magnetic stirrer, 10.5 g (50.6 mmol) of N,N'-dicyclohexylcarbodiimide (manufactured by Wako Pure Chemical Industries, Ltd.) was added thereto. Then, the resulting mixture was heated to room temperature and stirred for 3 hours. After the completion of the reaction, the reaction solution was filtered, and the filtrate was concentrated under reduced pressure. The concentrated residue was purified by silica gel chromatography (n-hexane/ethyl acetate = 9/1), whereby 17.0 g (yield 85%) of an organosilicon compound 3 represented by the following formula [8], which was a colorless transparent liquid, was obtained. The physical property is shown below.

¹H-NMR (400 MHz, CDCl₃) δ 5.0 (d, J=9.6 Hz, 1H), 4.3 (dd, J=4.8 Hz and 9.6 Hz, 1H), 3.8 (q, J=6.8 Hz, 6H), 2.9 (t, J=7.6 Hz, 2H), 2.3-2.2 (m, 1H), 1.7-1.6 (m, 2H), 1.5 (s, 9H), 1.2 (t, J=6.8 Hz, 9H), 1.0 (d, J=6.8 Hz, 3H), 0.9 (d, J=6.8 Hz, 3H), 0.7-0.6 (m, 2H).

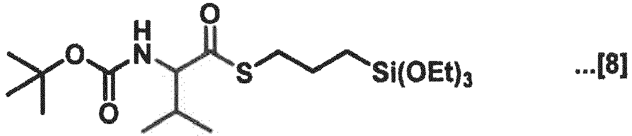

### Example 3: Synthesis of Thioester-Type Triethoxysilane Having BOC-Leucine Residue (Organosilicon Compound 4)

Into a 500 mL three-necked flask equipped with a thermometer and a magnetic stirrer were added 11.3 g (45.3 mmol) of BOC-leucine monohydrate (N-(tert-butoxycarbonyl)-L-leucine monohydrate, manufactured by Tokyo Chemical Industry Co., Ltd.), 113 g of N,N-dimethylformamide (DMF) (manufactured by Wako Pure Chemical Industries, Ltd.), 10.8 g (45.3 mmol) of 3-mercaptopropyltriethoxysilane (manufactured by Tokyo Chemical Industry Co., Ltd.), and 0.55 g (4.5 mmol) of N,N-dimethyl-4-aminopyridine (manufactured by Wako Pure Chemical Industries, Ltd.). After cooling to 5°C while stirring the contents of the flask with the magnetic stirrer, 10.3 g (49.9 mmol) of N,N'-dicyclohexylcarbodiimide (manufactured by Wako Pure Chemical Industries, Ltd.) was added thereto. Then, the resulting mixture was heated to room temperature and stirred overnight. After the completion of the reaction, the reaction solution was separated by adding 100 g of ethyl acetate and 100 g of ultrapure water, and the separated aqueous phase was extracted twice with 100 g of ethyl acetate. The extracted organic phase was washed with ultrapure water and a 15 wt% aqueous sodium chloride solution sequentially, dried with magnesium sulfate, and filtered. The filtrate was concentrated under reduced pressure. The concentrated residue was purified by silica gel chromatography (n-hexane/ethyl acetate = 9/1), whereby 11.0 g (yield 54%) of an organosilicon compound 4 represented by the following formula [9], which was a colorless transparent liquid, was obtained. The physical property is shown below.

¹H-NMR (400 MHz, CDCl₃) δ 4.8 (d, J=8.4 Hz, 1H), 4.4-4.3 (m, 1H), 3.8 (q, J=6.8 Hz, 6H), 2.9 (t, J=7.2 Hz, 2H), 1.7-1.6 (m, 5H), 1.5 (s, 9H), 1.2 (t, J=6.8 Hz, 9H), 0.9 (d, J=6.4 Hz, 6H), 0.7-0.6 (m, 2H).

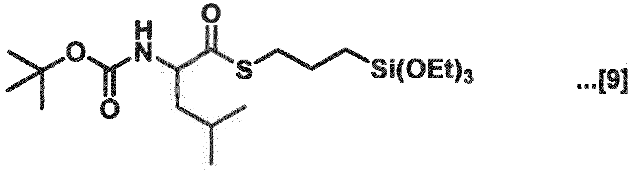

### Example 4: Synthesis of Thioester-Type Triethoxysilane Having BOC-Isoleucine Residue (Organosilicon Compound 5)

Into a 500 mL three-necked flask equipped with a thermometer and a magnetic stirrer were added 11.2 g (46.5 mmol) of BOC-isoleucine hemihydrate (N-(tert-butoxycarbonyl)-L-isoleucine hemihydrate, manufactured by Tokyo Chemical Industry Co., Ltd.), 112 g of DMF (manufactured by Wako Pure Chemical Industries, Ltd.), 10.1 g (46.5 mmol) of 3-mercaptopropyltriethoxysilane (manufactured by Tokyo Chemical Industry Co., Ltd.), and 0.57 g (4.6 mmol) of N,N-dimethyl-4-aminopyridine (manufactured by Wako Pure Chemical Industries, Ltd.). After cooling to 5°C while stirring the contents of the flask with the magnetic stirrer, 10.6 g (51.1 mmol) of N,N'-dicyclohexylcarbodiimide (manufactured by Wako Pure Chemical Industries, Ltd.) was added thereto. Then, the resulting mixture was heated to room temperature and stirred overnight. After the completion of the reaction, the reaction solution was separated by adding 100 g of ethyl acetate and 100 g of ultrapure water, and the separated aqueous phase was extracted twice with 100 g of ethyl acetate. The extracted organic phase was washed with ultrapure water and a 15 wt% aqueous sodium chloride solution sequentially, dried with magnesium sulfate, and filtered. The filtrate was concentrated under reduced pressure. The concentrated residue was purified by silica gel chromatography (n-hexane/ethyl acetate = 9/1), whereby 11.9 g (yield 57%) of an organosilicon compound 5 represented by the following formula [10], which was a colorless transparent liquid, was obtained. The physical property is shown below.

¹H-NMR (400 MHz, CDCl₃) δ 5.0 (d, J=9.2 Hz, 1H), 4.3 (dd, J=4.4 Hz and 9.6 Hz, 1H), 3.8 (q, J=6.8 Hz, 6H), 2.9 (t, J=7.6 Hz, 2H), 2.1-1.9 (br, 1H), 1.7-1.6 (m, 2H), 1.5 (s, 9H), 1.5-1.3 (m, 1H), 1.2 (t, J=6.8 Hz, 9H), 1.2-1.0 (m, 1H), 0.9 (d, J=6.8 Hz, 3H), 0.9 (t, J=7.2 Hz, 3H), 0.7-0.6 (m, 2H).

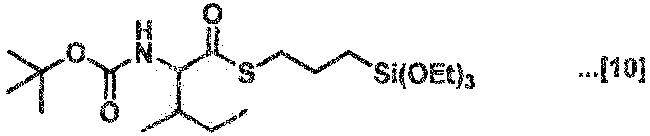

### Example 5: Synthesis of Thioester-Type Triethoxysilane Having BOC-Glutamic Acid Residue (Organosilicon Compound 6)

Into a 500 mL three-necked flask equipped with a thermometer and a magnetic stirrer were added 13.0 g (52.6 mmol) of BOC-glutamic acid (N-(tert-butoxycarbonyl)-L-glutamic acid, manufactured by Tokyo Chemical Industry Co., Ltd.), 130 g of DMF (manufactured by Wako Pure Chemical Industries, Ltd.), 25.1 g (105.2 mmol) of 3-mercaptopropyltriethoxysilane (manufactured by Tokyo Chemical Industry Co., Ltd.), and 1.28 g (10.5 mmol) of N,N-dimethyl-4-aminopyridine (manufactured by Wako Pure Chemical Industries, Ltd.). After cooling to 5°C while stirring the contents of the flask with the magnetic stirrer, 23.9 g (115.7 mmol) of N,N'-dicyclohexylcarbodiimide (manufactured by Wako Pure Chemical Industries, Ltd.) was added thereto. Then, the resulting mixture was heated to room temperature and stirred overnight. After the completion of the reaction, the reaction solution was separated by adding 300 g of ethyl acetate, 100 g of hexane and 400 g of ultrapure water, and the separated aqueous phase was extracted twice with 200 g of ethyl acetate. The extracted organic phase was washed with ultrapure water and a 15 wt% aqueous sodium chloride solution sequentially, dried with magnesium sulfate, and filtered. The filtrate was concentrated under reduced pressure. The concentrated residue was purified by silica gel chromatography (n-hexane/ethyl acetate = 9/1), whereby 15.6 g (yield 43%) of an organosilicon compound 6 represented by the following formula [11], which was a colorless transparent liquid, was obtained. The physical property is shown below.

¹H-NMR (400 MHz, CDCl₃) δ 5.0 (d, J=8.8 Hz, 1H), 4.4-4.3 (m, 1H), 3.8 (q, J=6.8 Hz, 12H), 2.9 (t, J=6.8 Hz, 4H), 2.7-2.6 (m, 2H), 2.3-2.2 (m, 1H), 2.0-1.9 (m, 1H), 1.8-1.6 (m, 4H), 1.5 (s, 9H), 1.2 (t, J=6.8 Hz, 18H), 0.8-0.6 (m, 4H).

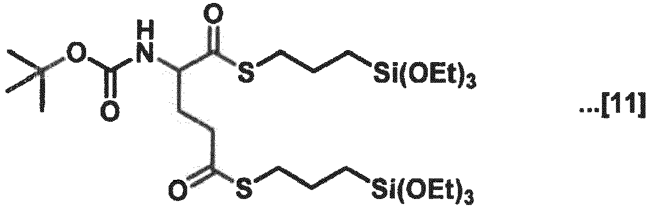

### Example 6: Synthesis of Thioester-Type Triethoxysilane Having BOC-Methionine Residue (Organosilicon Compound 7)

Into a 200 mL three-necked flask equipped with a thermometer and a magnetic stirrer were added 12.0 g (48.1 mmol) of BOC-methionine (N-(tert-butoxycarbonyl)-L-methionine, manufactured by Tokyo Chemical Industry Co., Ltd.), 120 g of dichloromethane (manufactured by Wako Pure Chemical Industries, Ltd.), 11.5 g (48.1 mmol) of 3-mercaptopropyltriethoxysilane (manufactured by Tokyo Chemical Industry Co., Ltd.), and 0.59 g (4.8 mmol) of N,N-dimethyl-4-aminopyridine (manufactured by Wako Pure Chemical Industries, Ltd.). After cooling to 5°C while stirring the contents of the flask with the magnetic stirrer, 10.9 g (52.9 mmol) of N,N'-dicyclohexylcarbodiimide (manufactured by Wako Pure Chemical Industries, Ltd.) was added thereto. Then, the resulting mixture was heated to room temperature and stirred for 4 hours. After the completion of the reaction, the reaction solution was filtered, and the filtrate was concentrated under reduced pressure. The concentrated residue was purified by silica gel chromatography (n-hexane/ethyl acetate = 9/1), whereby 19.6 g (yield 87%) of an organosilicon compound 7 represented by the following formula [12], which was a colorless transparent liquid, was obtained. The physical property is shown below.

¹H-NMR (400 MHz, CDCl₃) δ 5.2 (d, J=8.4 Hz, 1H), 4.5-4.4 (m, 1H), 3.8 (q, J=7.2 Hz, 6H), 2.9 (t, J=7.2 Hz, 2H), 2.6-2.4 (m, 2H), 2.2-2.0 (m, 1H), 2.1 (s, 3H), 1.9-1.8 (m, 1H), 1.7-1.6 (m, 2H), 1.4 (s, 9H), 1.2 (t, J=7.2 Hz, 9H), 0.7-0.6 (m, 2H).

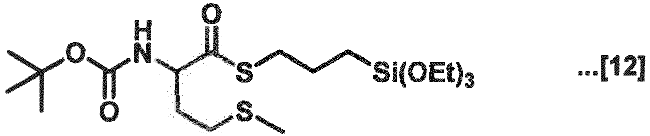

### Example 7: Synthesis of Thioester-Type Triethoxysilane Having BOC-Phenylalanine Residue (Organosilicon Compound 8)

Into a 300 mL three-necked flask equipped with a thermometer and a magnetic stirrer were added 14.0 g (52.8 mmol) of BOC-phenylalanine (N-(tert-butoxycarbonyl)-L-phenylalanine, manufactured by Tokyo Chemical Industry Co., Ltd.), 140 g of dichloromethane (manufactured by Wako Pure Chemical Industries, Ltd.), 12.5 g (52.8 mmol) of 3-mercaptopropyltriethoxysilane (manufactured by Tokyo Chemical Industry Co., Ltd.), and 0.64 g (5.3 mmol) of N,N-dimethyl-4-aminopyridine (manufactured by Wako Pure Chemical Industries, Ltd.). After cooling to 5°C while stirring the contents of the flask with the magnetic stirrer, 12.0 g (58.0 mmol) of N,N'-dicyclohexylcarbodiimide (manufactured by Wako Pure Chemical Industries, Ltd.) was added thereto. Then, the resulting mixture was heated to room temperature and stirred for 4 hours. After the completion of the reaction, the reaction solution was filtered, and the filtrate was concentrated under reduced pressure. The concentrated residue was purified by silica gel chromatography (n-hexane/ethyl acetate = 9/1), whereby 22.7 g (yield 89%) of an organosilicon compound 8 represented by the following formula [13], which was a white solid, was obtained. The physical property is shown below.

¹H-NMR (400 MHz, CDCl₃) δ 7.4-7.3 (m, 2H), 7.3-7.2 (m, 1H), 7.2-7.1 (m, 2H), 5.0 (d, J=8.8 Hz, 1H), 4.6 (dd, J=6.8 Hz and 14.0 Hz, 1H), 3.8 (q, J=6.8 Hz, 6H), 3.2 (dd, J=5.5 Hz and 14.0 Hz, 1H), 3.1 (dd, J=7.0 Hz and 14.0 Hz, 1H), 2.9 (t, J=7.2 Hz, 2H), 1.8-1.6 (m, 2H), 1.4 (s, 9H), 1.2 (t, J=6.8 Hz, 9H), 0.8-0.6 (m, 2H).

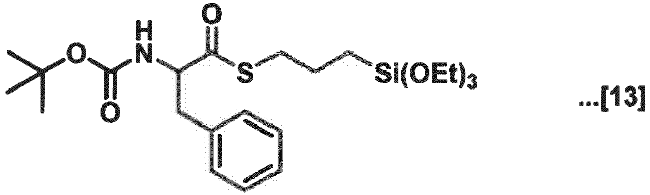

### Example 8: Synthesis of Thioester-Type Triethoxysilane Having BOC-β-Alanine Residue (Organosilicon Compound 9)

Into a 300 mL three-necked flask equipped with a thermometer and a magnetic stirrer were added 12.0 g (63.4 mmol) of BOC-β-alanine (N-(tert-butoxycarbonyl)-β-alanine, manufactured by Tokyo Chemical Industry Co., Ltd.), 120 g of dichloromethane (manufactured by Wako Pure Chemical Industries, Ltd.), 15.1 g (63.4 mmol) of 3-mercaptopropyltriethoxysilane (manufactured by Tokyo Chemical Industry Co., Ltd.), and 0.77 g (6.3 mmol) of N,N-dimethyl-4-aminopyridine (manufactured by Wako Pure Chemical Industries, Ltd.). After cooling to 5°C while stirring the contents of the flask with the magnetic stirrer, 14.4 g (69.8 mmol) of N,N'-dicyclohexylcarbodiimide (manufactured by Wako Pure Chemical Industries, Ltd.) was added thereto. Then, the resulting mixture was heated to room temperature and stirred overnight. After the completion of the reaction, the reaction solution was filtered, and the filtrate was concentrated under reduced pressure. The concentrated residue was purified by silica gel chromatography (n-hexane/ethyl acetate = 9/1), whereby 24.2 g (yield 93%) of an organosilicon compound 9 represented by the following formula [14], which was a colorless transparent liquid, was obtained. The physical property is shown below.

¹H-NMR (400 MHz, CDCl₃) δ 4.9 (br, 1H), 3.8 (q, J=7.2 Hz, 6H), 3.5-3.3 (m, 2H), 2.9 (t, J=7.2 Hz, 2H), 2.8 (t, J=6.0 Hz, 2H), 1.7-1.6 (m, 2H), 1.2 (t, J=7.2 Hz, 9H), 0.7-0.6 (m, 2H).

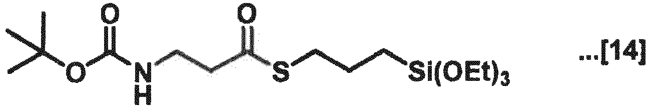

### Example 9: Synthesis of Thioester-Type Triethoxvsilane Having BOC-6-Aminohexanoic Acid Residue (Organosilicon Compound 10)

Into a 1000 mL three-necked flask equipped with a thermometer and a magnetic stirrer were added 15.0 g (114.4 mmol) of 6-aminohexanoic acid, 119 g of IN aqueous sodium hydroxide solution (manufactured by Wako Pure Chemical Industries, Ltd.), and 203 g of tetrahydrofuran (THF) (manufactured by Wako Pure Chemical Industries, Ltd.). While stirring the contents of the flask with the magnetic stirrer, 25.0 g (114.4 mmol) of di-tert-butyl dicarbonate (manufactured by Wako Pure Chemical Industries, Ltd.) was added, and the resulting mixture was stirred overnight. After the completion of the reaction, the reaction solution was acidified with hydrochloric acid (manufactured by Wako Pure Chemical Industries, Ltd.), and the resulting solution was extracted twice by adding 200 g of ethyl acetate. The extracted organic phase was washed with ultrapure water and a 15 wt% aqueous sodium chloride solution sequentially, dried with magnesium sulfate, and filtered. The filtrate was concentrated under reduced pressure to obtain 28.0 g of crude BOC-6-aminohexanoic acid, which was a colorless transparent liquid. The obtained compound was used in the next reaction without purification.

Into a 500 mL three-necked flask equipped with a thermometer and a magnetic stirrer were added 28.0 g of crude BOC-6-aminohexanoic acid, 265 g of dichloromethane (manufactured by Wako Pure Chemical Industries, Ltd.), 27.3 g (114.4 mmol) of 3-mercaptopropyltriethoxysilane (manufactured by Tokyo Chemical Industry Co., Ltd.), and 1.4 g (11.4 mmol) of N,N-dimethyl-4-aminopyridine (manufactured by Wako Pure Chemical Industries, Ltd.). After cooling to 5°C while stirring the contents of the flask with the magnetic stirrer, 26.0 g (125.8 mmol) of N,N'-dicyclohexylcarbodiimide (manufactured by Wako Pure Chemical Industries, Ltd.) was added thereto. Then, the resulting mixture was heated to room temperature and stirred for 5 hours. After the completion of the reaction, the reaction solution was filtered, and the filtrate was concentrated under reduced pressure. The concentrated residue was purified by silica gel chromatography (n-hexane/ethyl acetate = 9/1), whereby 44.4 g (yield in two steps 86%) of an organosilicon compound 10 represented by the following formula [15], which was a colorless transparent liquid, was obtained. The physical property is shown below.

¹H-NMR (400 MHz, CDCl₃) δ 4.6-4.5 (br, 1H), 3.8 (q, J=6.8 Hz, 6H), 3.1-3.0 (m, 2H), 2.9 (t, J=7.2 Hz, 2H), 2.5 (t, J=7.2 Hz, 2H), 2.7-2.6 (m, 4H), 1.5-1.4 (m, 2H), 1.4 (s, 9H), 1.4-1.3 (m, 2H), 1.2 (t, J=6.8 Hz, 9H), 0.7-0.6 (m, 2H).

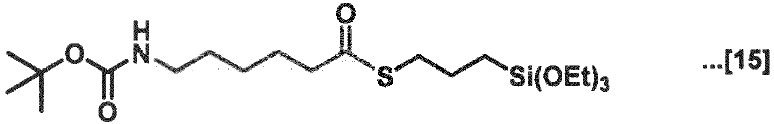

### Example 10: Synthesis of Boc Protected 3-Mercaptopropyltriethoxysilane (Organosilicon Compound 11)

Into a 500 mL three-necked flask equipped with a thermometer and a magnetic stirrer were added 10.0 g (41.9 mmol) of 3-mercaptopropyltriethoxysilane (manufactured by Tokyo Chemical Industry Co., Ltd.), 300 g of acetonitrile (manufactured by Wako Pure Chemical Industries, Ltd.), and 15.1 g (109.1 mmol) of potassium carbonate (manufactured by Wako Pure Chemical Industries, Ltd.). While stirring the contents of the flask with the magnetic stirrer, 11.9 g (54.5 mmol) of di-tert-butyl dicarbonate (manufactured by Wako Pure Chemical Industries, Ltd.) was added thereto, and the resulting mixture was stirred at room temperature for 2 days. After the completion of the reaction, the reaction solution was filtered, and the filtrate was concentrated under reduced pressure. The concentrated residue was purified by silica gel chromatography (n-hexane/ethyl acetate = 50/1), whereby 10.7 g (yield 76%) of an organosilicon compound 11 represented by the following formula [16], which was a colorless transparent liquid, was obtained. The physical property is shown below.

¹H-NMR (400 MHz, CDCl₃) δ 3.8 (q, J=6.8 Hz, 6H), 2.8 (t, J=7.2 Hz, 2H), 2.8-2.7 (m, 2H), 1.5 (s, 9H), 1.2 (t, J=6.8 Hz, 9H), 0.8-0.7 (m, 2H).

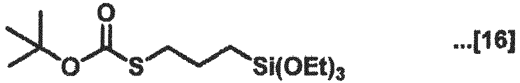

### Examples 11 to 20 and Comparative Example 1: Production of Rubber Composition

A kneading test was performed using LABO PLASTOMILL 10C100 equipped with 250cc Banbury mixer type attachment BR-250 (manufactured by Toyo Seiki Co., Ltd.). The apparatus temperature was set to oil circulation heating of 90°C, and the rotor rotation speed of the mixer was kept constant at 60 rpm. The test was performed with a compounding based on 100 g of rubber. The test procedure was as follows. The rubber component was masticated for 30 seconds, the agents shown in Ingredients (I) of Table 1 were then added, and the resulting mixture was kneaded for 30 seconds. Next, the agents shown in Ingredients (II) of Table 1 were added, the resulting mixture was kneaded for 3 minutes, and then the kneaded product was discharged. Note that the amounts of the organosilicon compounds in Examples and Comparative Examples were adjusted so that the amounts of sulfur in the organosilicon compounds in Examples and Comparative Examples were the same. After cooling the discharged kneaded product with a 6-inch roll of room temperature, the crosslinking components shown in Ingredients (III) of Table 1 were added, and the resulting mixture was kneaded for 6 minutes to obtain a sheet (uncrosslinked sheet) having a thickness of about 2 mm. The next day, the uncrosslinked sheet was subjected to hot press crosslinking at 160°C for 20 minutes to obtain a test sample (crosslinked sheet).

### Tensile Test

A No. 3 dumbbell-shaped test piece was punched out from the crosslinked sheet and subjected to a tensile test in accordance with JIS K6251 using Technograph TG-2kN manufactured by Minebea.

### Dynamic Viscoelasticity Test 1

A test piece of 4mm width × 40 mm length × 2 mm thickness was punched out from the crosslinked sheet and subjected to a measurement using DMS6100 manufactured by Seiko Instruments Inc. under the conditions of a distance between chucks of 20 mm, an initial load of 1000 mN, a tensile strain of 10 µm, and a vibration of 10 Hz. The measurement temperature range was from -20°C to 20°C, and the temperature was raised at a rate of 2°C/min to measure a value of tan δ at 0°C.

### Dynamic Viscoelasticity Test 2

A test piece of 4mm width × 25 mm length × 2 mm thickness was punched out from the crosslinked sheet and subjected to a measurement using Rheogel-4000 manufactured by UBM under the conditions of a distance between chucks of 20 mm, an initial strain of 5%, a dynamic amplitude of 0.5%, and a vibration of 10Hz. The measurement temperature range was kept constant at 60°C.

### Abrasion Test

A test piece (crosslinked sheet) in accordance with JIS K6264 was prepared and subjected to a measurement at a tilt angle of 15° using an Akron abrasion tester in accordance with JIS K6264-2. The applied load was 44.1 N, and the rotation speed of the test piece was 250 rotations per minute.

The compounding ingredients used in Examples and Comparative Examples are shown below.
*1 SL552 manufactured by JSR Corporation
*2 Nipsil AQ (BET specific surface area: 215 m²/g) manufactured by Tosoh Silica Corporation
*3 Sunthene 415 manufactured by Nippon Oil Corporation
*4 STEARIC ACID SAKURA manufactured by NOF Corporation
*5 Nocrac 6C manufactured by Ouchi Shinko Chemical Industrial Co.,Ltd.
*6 CABRUS-2 ((poly)sulfide organosilicon compound) manufactured by Osaka Soda Co., Ltd.
*7 Zinc Oxide of No.2 manufactured by Sakai Chemical Industry Co., Ltd.
*8 Nocceler D (guanidine crosslinking accelerator) manufactured by Ouchi Shinko Chemical Industrial Co., Ltd.
*9 Nocceler CZ (sulfenamide crosslinking accelerator) manufactured by Ouchi Shinko Chemical Industrial Co.,Ltd.
*10 Colloidal sulfur manufactured by Hosoi Chemical Industry Co.,Ltd.

**[TABLE 1]**

| Unit:parts by mass | | | | | | | | | | | | |
|---|---|---|---|---|---|---|---|---|---|---|---|---|
| | | Example 11 | Example 12 | Example 13 | Example 14 | Example 15 | Example 16 | Example 17 | Example 18 | Example 19 | Example 20 | Comparative Example 1 |
| rubber component | styrene-butadiene rubber *1 | 100 | 100 | 100 | 100 | 100 | 100 | 100 | 100 | 100 | 100 | 100 |
| Ingredients (I) | silica *2 | 40 | 40 | 40 | 40 | 40 | 40 | 40 | 40 | 40 | 40 | 40 |
| | softening agent *3 | 20 | 20 | 20 | 20 | 20 | 20 | 20 | 20 | 20 | 20 | 20 |
| | stearic acid *4 | 2 | 2 | 2 | 2 | 2 | 2 | 2 | 2 | 2 | 2 | 2 |
| | antiaging agent *5 | 1 | 1 | 1 | 1 | 1 | 1 | 1 | 1 | 1 | 1 | 1 |
| Ingredients (II) | silica *2 | 40 | 40 | 40 | 40 | 40 | 40 | 40 | 40 | 40 | 40 | 40 |
| | organosilicon compound 1 | 10.7 | | | | | | | | | | |
| | organosilicon compound 2 *6 | | | | | | | | | | | 6.4 |
| | organosilicon compound 3 | | 11.4 | | | | | | | | | |
| | organosilicon compound 4 | | | 11.8 | | | | | | | | |
| | organosilicon compound 5 | | | | 11.8 | | | | | | | |
| | organosilicon compound 6 | | | | | 9.0 | | | | | | |
| | organosilicon compound 7 | | | | | | 12.3 | | | | | |
| | organosilicon compound 8 | | | | | | | 12.7 | | | | |
| | organosilicon compound 9 | | | | | | | | 10.7 | | | |
| | organosilicon compound 10 | | | | | | | | | 11.8 | | |
| | organosilicon compound 11 | | | | | | | | | | 8.8 | |
| Ingredients (III) | zinc oxide *7 | 4.0 | 4.0 | 4.0 | 4.0 | 4.0 | 4.0 | 4.0 | 4.0 | 4.0 | 4.0 | 4.0 |
| | accelerator 1 *8 | 2.0 | 2.0 | 2.0 | 2.0 | 2.0 | 2.0 | 2.0 | 2.0 | 2.0 | 2.0 | 2.0 |
| | accelerator 2 *9 | 1.8 | 1.8 | 1.8 | 1.8 | 1.8 | 1.8 | 1.8 | 1.8 | 1.8 | 1.8 | 1.8 |
| | sulfur *10 | 1.5 | 1.5 | 1.5 | 1.5 | 1.5 | 1.5 | 1.5 | 1.5 | 1.5 | 1.5 | 1.5 |

The test results of Examples and Comparative Example obtained by te above tests are shown in Table 2.

**[TABLE 2]**

| | | Example 11 | Example 12 | Example 13 | Example 14 | Example 15 | Example 16 | Example 17 | Example 18 | Example 19 | Example 20 | Comparative Example 1 |
|---|---|---|---|---|---|---|---|---|---|---|---|---|
| Tensile Test | TSb (MPa) | 16.3 | 17.4 | 16.6 | 18.2 | 17.4 | 19.5 | 19.9 | 18.7 | 19.0 | 13.8 | 16.5 |
| | Eb (%) | 285 | 290 | 275 | 290 | 265 | 350 | 340 | 285 | 285 | 250 | 300 |
| Dynamic Viscoelasticity Test 1 tan δ at 0°C | | 0.359 | 0.342 | 0.391 | 0.299 | 0.366 | 0.307 | 0.325 | 0.371 | 0.282 | 0.387 | 0.193 |
| Dynamic Viscoelasticity Test 2 tan δ at 60°C | | 0.110 | 0.108 | 0.100 | 0.109 | 0.100 | 0.141 | 0.119 | 0.107 | 0.111 | 0.104 | 0.168 |
| Abrasion Test (cc / 1000 rotations) | | 0.26 | 0.23 | 0.25 | 0.21 | 0.26 | 0.25 | 0.19 | 0.23 | 0.18 | 0.24 | 0.30 |

As shown in Table 2, as compared with Comparative Example 1 using the most widely used polysulfide organosilicon compound, each of Examples 11 to 20 using the organosilicon compounds of the present invention had a larger value of tan δ at 0°C, which suggested that the grip performance was excellent, and had a smaller value of tan δ at 60°C, which suggested that the fuel economy was excellent. Usually, when the value of tan δ at 60°C becomes smaller, the value of tan δ at 0°C also tends to become smaller. On the other hand, Examples 11 to 20 using the organosilicon compounds of the present invention are favorable in that those are excellent in both grip performance and fuel economy.

Furthermore, it was suggested that Examples 11 to 20 using the organosilicon compounds of the present invention are not inferior in mechanical properties and abrasion resistance as compared with Comparative Example 1.

In addition, the organosilicon compounds of the present invention used in Examples 11 to 17 are favorable in that those are derived from sustainable materials, unlike the polysulfide organosilicon compound, which is currently used widely.

### INDUSTRIAL APPLICABILITY

By using the organosilicon compound of the present invention, it is possible to provide a rubber composition and a rubber material that are excellent in grip performance and fuel economy. Therefore, such a rubber composition and such a rubber material can be suitably used for the production of rubber parts to be dynamically used, such as a tire tread, an anti-vibration rubber, and a belt.

## Claims

1. An organosilicon compound represented by the following general formula [A], [B], [1], or [2], or a condensate comprising at least one organosilicon compound selected from organosilicon compounds represented by the following general formulas [A], [B], [1], and [2] as a condensation component: 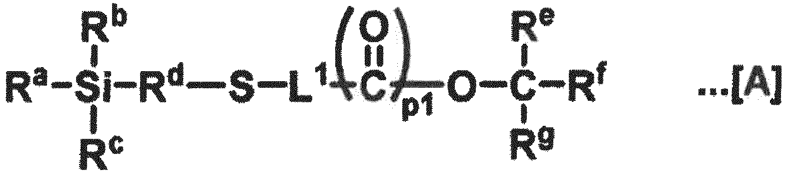
wherein R^{a}, R^{b}, and R^{c} are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O⁻((CH₂)_{b}O)_{c} wherein a is 1 to 18, b is 1 to 6, and c is 1 to 18, a carboxyl group having 2 to 18 carbon atoms, and a halogen atom, and at least one of R^{a}, R^{b}, and R^{c} is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
R^{d} is a substituted or unsubstituted divalent hydrocarbon group having 1 to 18 carbon atoms and optionally having an aromatic ring;
L¹ is a single bond or a divalent organic group;
R^{e}, R^{f} and R^{g} are each independently a monovalent hydrocarbon group having 1 to 10 carbon atoms; and
p1 is 0 or 1; 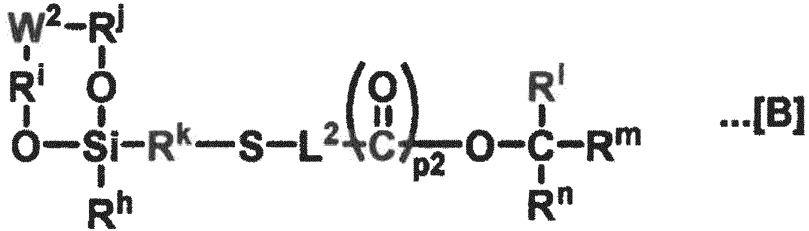
wherein R^{h} is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
Rⁱ and R^{j} are each independently a substituted or unsubstituted alkylene group having 1 to 8 carbon atoms;
W² is any of -C(=O)-, -O-, -NR¹³⁻, and -CR¹⁴R¹⁵⁻, and R¹³, R¹⁴ and R¹⁵ are a substituted or unsubstituted alkyl group having 1 to 18 carbon atoms or hydrogen;
R^{k} is a substituted or unsubstituted divalent hydrocarbon group having 1 to 18 carbon atoms and optionally having an aromatic ring;
L² is a single bond or a divalent organic group;
R^{l}, R^{m} and Rⁿ are each independently a monovalent hydrocarbon group having 1 to 10 carbon atoms; and
p2 is 0 or 1; 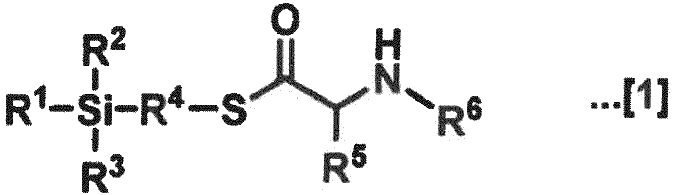
wherein R¹, R², and R³ are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R¹, R², and R³ is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
R⁴ is a substituted or unsubstituted divalent hydrocarbon group having 1 to 18 carbon atoms and optionally having an aromatic ring;
R⁵ is hydrogen or an organic group; and
R⁶ is hydrogen or an amino-protecting group; and 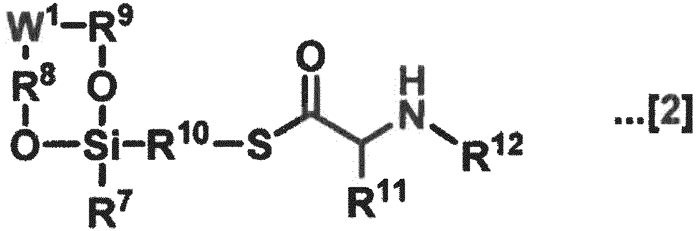
wherein R⁷ is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
R⁸ and R⁹ are each independently a substituted or unsubstituted alkylene group having 1 to 8 carbon atoms;
W¹ is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
R¹⁰ is a substituted or unsubstituted divalent hydrocarbon group having 1 to 18 carbon atoms and optionally having an aromatic ring;
R¹¹ is hydrogen or an organic group; and
R¹² is hydrogen or an amino-protecting group.

2. The organosilicon compound according to claim 1, wherein the divalent organic group is a linear linking group having bonds at both ends and optionally having a side chain, and when a distance between the two bonds is counted with the number of atoms, the distance is 10 or less.

3. The organosilicon compound according to claim 2, wherein the linear linking group is one or a combination of two or more selected from a linear alkylene group, -NH-, and -C(=O)-.

4. The organosilicon compound according to claim 2 or 3, wherein the side chain is a substituent or a hydrocarbon group optionally having a substituent.

5. The organosilicon compound according to any of claims 2 to 4, wherein the side chain is a natural α-amino acid side-chain group or a group derived from a natural α-amino acid side-chain group.

6. The organosilicon compound according to any of claims 1 to 5, wherein the monovalent hydrocarbon group having 1 to 10 carbon atoms represents an alkyl group having 1 to 4 carbon atoms or a phenyl group.

7. The organosilicon compound according to claim 1, wherein in the formula [1], R¹, R², and R³ are each independently a substituted or unsubstituted alkoxy group having 1 to 18 carbon atoms, and R⁴ is a substituted or unsubstituted divalent hydrocarbon group having 1 to 18 carbon atoms.

8. A rubber composition comprising a rubber; a silica filler; and an organosilicon compound represented by the following general formula [A], [B], [1], or [2], or a condensate comprising at least one organosilicon compound selected from organosilicon compounds represented by the following general formulas [A], [B], [1], and [2] as a condensation component; 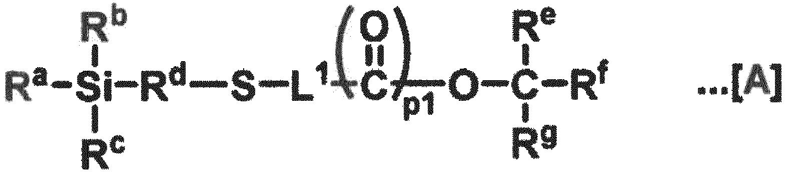
wherein R^{a}, R^{h}, and R^{c} are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R^{a}, R^{b}, and R^{c} is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
R^{d} is a substituted or unsubstituted divalent hydrocarbon group having 1 to 18 carbon atoms and optionally having an aromatic ring;
L¹ is a single bond or a divalent organic group;
R^{e}, R^{f} and R^{g} are each independently a monovalent hydrocarbon group having 1 to 10 carbon atoms; and
p1 is 0 or 1; 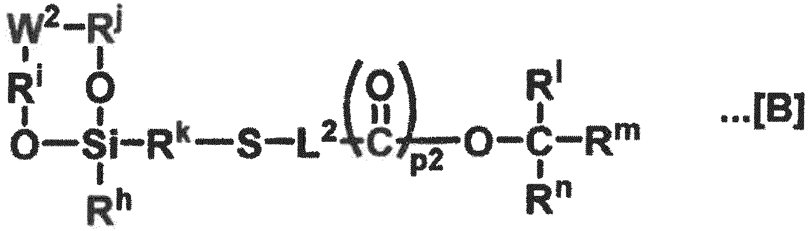
wherein R^{h} is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
Rⁱ and R^{j} are each independently a substituted or unsubstituted alkylene group having 1 to 8 carbon atoms;
W² is any of -C(=O)-, -O-, -NR¹³⁻, and -CR¹⁴R¹⁵⁻, and R¹³, R¹⁴ and R¹⁵ are a substituted or unsubstituted alkyl group having 1 to 18 carbon atoms or hydrogen;
R^{k} is a substituted or unsubstituted divalent hydrocarbon group having 1 to 18 carbon atoms and optionally having an aromatic ring;
L² is a single bond or a divalent organic group;
R^{l}, R^{m} and Rⁿ are each independently a monovalent hydrocarbon group having 1 to 10 carbon atoms; and
p2 is 0 or 1; 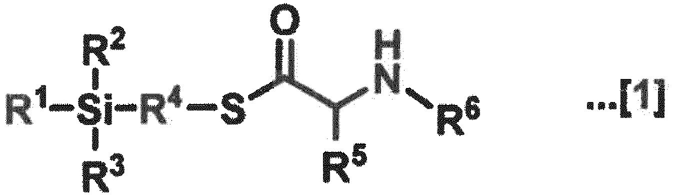
wherein R¹, R², and R³ are each independently any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, a carboxyl group having 2 to 18 carbon atoms, and a halogen atom, and at least one of R¹, R², and R³ is any of a substituted or unsubstituted alkoxy group having 1 to 18 carbon atoms, a hydroxy group, a polyalkylene glycol monoalkyl ether group represented by CₐH₂ₐ₊₁O-((CH₂)_{b}O)_{c} wherein a is 1 to 18, b is 1 to 6, and c is 1 to 18, an aminoalkoxy group having 1 to 18 carbon atoms, an alkylaminoalkoxy group having 2 to 18 carbon atoms, a dialkylaminoalkoxy group having 3 to 18 carbon atoms, a carboxyl group having 2 to 18 carbon atoms, and a halogen atom;
R⁴ is a substituted or unsubstituted divalent hydrocarbon group having 1 to 18 carbon atoms and optionally having an aromatic ring;
R⁵ is hydrogen or an organic group; and
R⁶ is hydrogen or an amino-protecting group; and 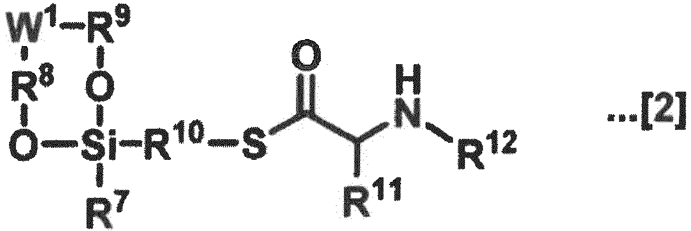
wherein R⁷ is any of a substituted or unsubstituted alkyl group having 1 to 18 carbon atoms, a substituted or unsubstituted alkoxy group having 1 to 18 carbon atoms, a siloxy group having a substituted or unsubstituted alkyl group having 1 to 18 carbon atoms, a siloxy group having a substituted or unsubstituted alkoxy group having 1 to 4 carbon atoms, an aminoalkoxy group having 1 to 18 carbon atoms, an alkylaminoalkoxy group having 2 to 18 carbon atoms, a dialkylaminoalkoxy group having 3 to 18 carbon atoms, a hydroxy group, a carboxyl group having 2 to 18 carbon atoms, a polyalkylene glycol monoalkyl ether group represented by CₐH₂ₐ₊₁O-((CH₂)_{b}O)_{c} wherein a is 1 to 18, b is 1 to 6, and c is 1 to 18, and a halogen atom;
R⁸ and R⁹ are each independently a substituted or unsubstituted alkylene group having 1 to 8 carbon atoms;
W¹ is any of -C(=O)-, -O-, -NR¹³-, and -CR¹⁴R¹⁵-, and R¹³, R¹⁴ and R¹⁵ are a substituted or unsubstituted alkyl group having 1 to 18 carbon atoms or hydrogen;
R¹⁰ is a substituted or unsubstituted divalent hydrocarbon group having 1 to 18 carbon atoms and optionally having an aromatic ring;
R¹¹ is hydrogen or an organic group; and
R¹² is hydrogen or an amino-protecting group.

9. The rubber composition according to claim 8, wherein the divalent organic group is a linear linking group having bonds at both ends and optionally having a side chain, and when a distance between the two bonds is counted with the number of atoms, the distance is 10 or less.

10. The rubber composition according to claim 9, wherein the linear linking group is one or a combination of two or more selected from a linear alkylene group, -NH-, and -C(=O)-.

11. The rubber composition according to claim 9 or 10, wherein the side chain is a substituent or a hydrocarbon group optionally having a substituent.

12. The rubber composition according to any of claims 9 to 11, wherein the side chain is a natural α-amino acid side-chain group or a group derived from a natural α-amino acid side-chain group.

13. The rubber composition according to any of claims 8 to 12, wherein the monovalent hydrocarbon group having 1 to 10 carbon atoms represents an alkyl group having 1 to 4 carbon atoms or a phenyl group.

14. The rubber composition according to claim 8, wherein in the formula [1], R¹, R², and R³ are each independently a substituted or unsubstituted alkoxy group having 1 to 18 carbon atoms, and R⁴ is a substituted or unsubstituted divalent hydrocarbon group having 1 to 18 carbon atoms.

15. The rubber composition according to any of claims 8 to 14, further comprising at least one selected from a vinyl organosilicon compound, an amino organosilicon compound, an alkyl organosilicon compound, an epoxy organosilicon compound, a methacrylic organosilicon compound, a (protected) mercapto organosilicon compound, a (poly)sulfide organosilicon compound, and condensates thereof.

16. The rubber composition according to any of claims 8 to 15, wherein the rubber is one or two or more selected from natural rubber (NR), polyisoprene rubber (IR), styrene-butadiene copolymer rubber (SBR), polybutadiene rubber (BR), acrylonitrile-butadiene copolymer rubber (NBR), chloroprene rubber (CR), ethylene-propylene copolymer rubber (EPDM), and butyl rubber (IIR).

17. The rubber composition according to any of claims 8 to 16, wherein the silica filler is a wet silica having a BET specific surface area of 20 to 300 m²/g.

18. A rubber material using the rubber composition according to any of claims 8 to 17.

19. A tire, a belt, or an anti-vibration rubber using the rubber material according to claim 18.
